Europäisches Patentamt

European Patent Office

Office européen des brevets

(11) Numéro de publication: **0 240 417 B1**

## FASCICULE DE BREVET EUROPEEN

(45) Date de publication de fascicule du brevet:
03.07.91

(51) Int. Cl.⁵: **H04N 5/265**

(21) Numéro de dépôt: 87400672.9

(22) Date de dépôt: **25.03.87**

(54) **Dispositif mélangeur de signaux vidéo.**

(30) Priorité: **28.03.86 FR 8604566**

(43) Date de publication de la demande:
**07.10.87 Bulletin 87/41**

(45) Mention de la délivrance du brevet:
**03.07.91 Bulletin 91/27**

(84) Etats contractants désignés:
**BE DE IT NL SE**

(56) Documents cités:
**EP-A- 0 160 549
GB-A- 1 228 412
US-A- 3 598 908**

(73) Titulaire: **Etablissement Public Télédiffusion de France
10, rue d'Oradour-sur-Glane
F-75015 Paris(FR)**

(72) Inventeur: **Macheboeuf, Guy
Val d'Haumont 37, allée des Pins
F-27130 Pullay par Verneuil sur Avre(FR)**

(74) Mandataire: **Cabinet Martinet & Lapoux
BP 405
F-78055 Saint Quentin en Yvelines
Cédex(FR)**

## Description

La présente invention concerne d'une manière générale des mélanges de signaux vidéo requis dans une régie de production de télévision afin d'obtenir notamment des effets spéciaux, tels qu'incrustations et surimpressions d'images, et des fondus enchaînés et des fondus au noir.

Dans une régie de télévision on dispose d'une manière connue, de plusieurs sources vidéo transmettant des signaux vidéo synchrones, en phase et de même nature ou standard, afin d'en sélectionner, selon les besoins, pour créer des effets spéciaux visibles dans l'image représentée par le signal vidéo résultant du mélange.

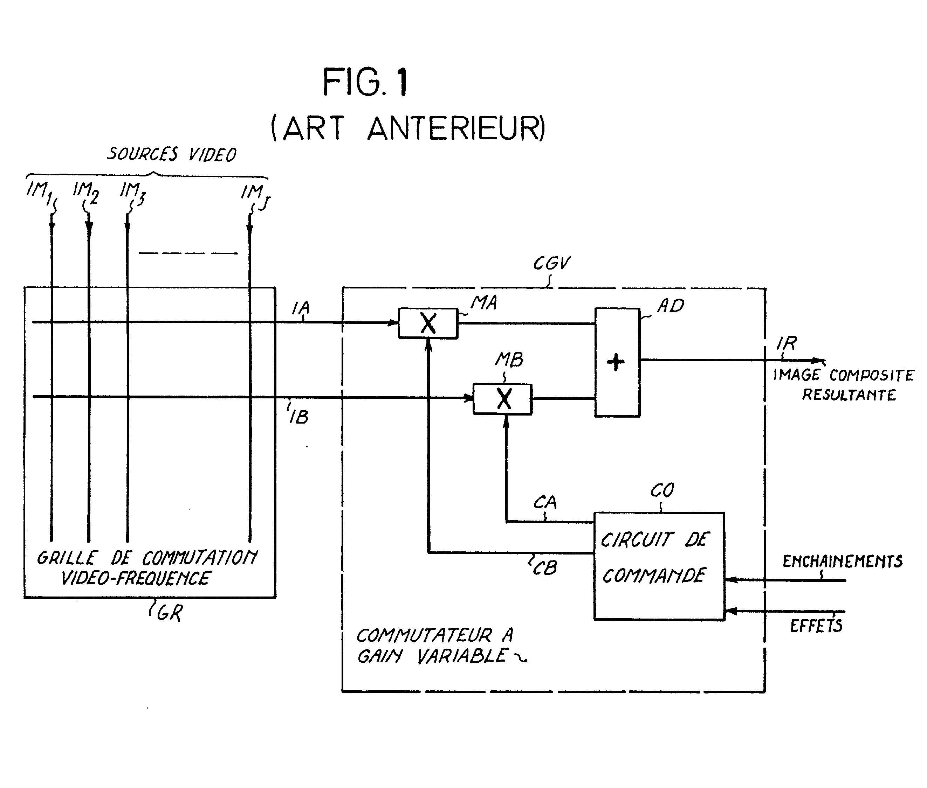

Les dispositifs mélangeurs d'images en télévision analogique ont actuellement une architecture de base montrée schématiquement aux Figs. 1 à 4 ci-après annexées. Tous ces dispositifs mélangeurs comprennent une grille de commutation à vidéofréquence GR recevant en entrée des signaux vidéo $IM_1$ à $IM_J$ en vue de sélectionner, à la demande, un certain nombre de ces signaux pour être combinés dans des mélangeurs élémentaires du genre "commutateur à gain variable" CGV.

Selon l'exemple simple montré à la Fig. 1, le dispositif mélangeur comprend qu'un seul mélangeur élémentaire CGV. Dans le mélangeur CGV, deux signaux vidéo IA et IB sélectionnés par la grille GR parmi les signaux $IM_1$ à $IM_J$ sont appliqués à deux amplificateurs à gain variable ou multiplieurs analogiques MA et MB recevant également deux signaux de commande CA et CB. Les deux signaux vidéo modifiés par les signaux de commande sont ensuite additionnés dans un additionneur AD en un signal résultant IR représentant l'image composite à diffuser.

Les signaux de commande CA et CB sont élaborés dans un circuit de commande CO, à partir de la sélection de signaux d'effets et d'enchaînement disponibles dans la régie afin d'obtenir dans l'image composite l'un des effets et enchaînements recherchés.

Pour créer une image composite résultant de la combinaison de plus de deux images, le dispositif mélangeur doit comprendre plusieurs mélangeurs CGV.

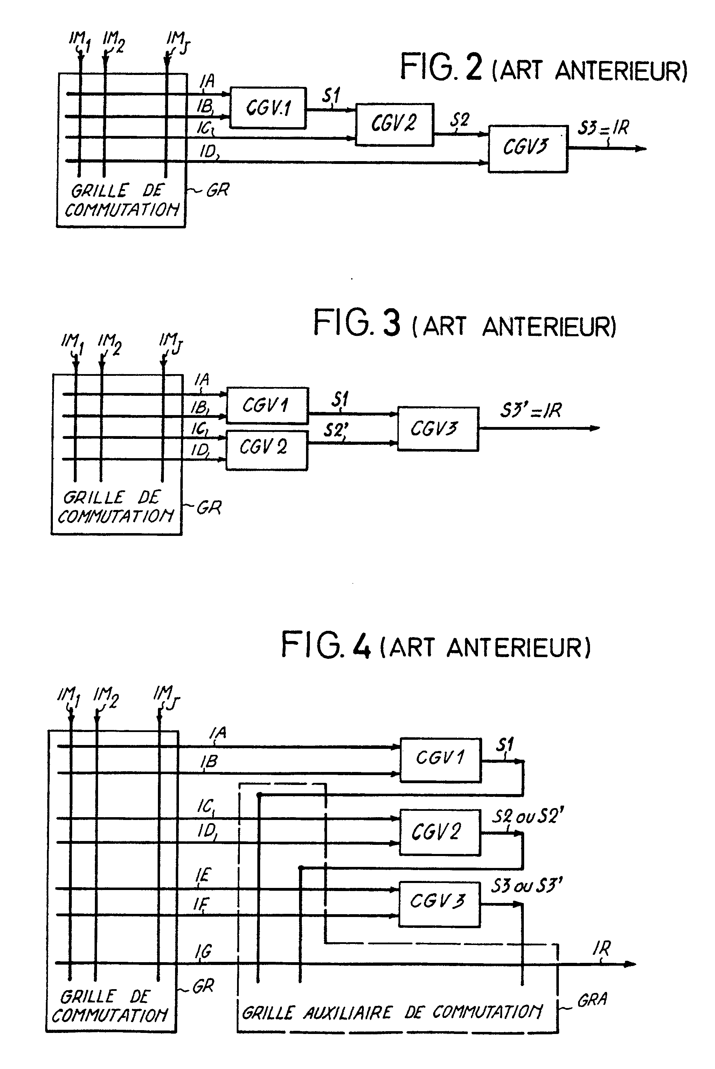

Par exemple, selon les Figs. 2 et 3, le signal résultant IR est issu de la combinaison de quatre signaux vidéo IA, IB, IC et ID sélectionnés par la grille GR. Selon la Fig. 2, le dispositif mélangeur comprend trois mélangeurs CGV1, CGV2 et CGV3 en cascade, c'est-à-dire le mélangeur CGV1 mélange les signaux IA et IB en un signal S1, le mélangeur CGV2 mélange les signaux S1 et IC en un signal S2, et le mélangeur CGV3 mélange les signaux S2 et ID en un signal S3 = IR. Dans le dispositif mélangeur montré à la Fig. 3, des mélangeurs CGV1 et CGV2 sont en parallèle et mélangent respectivement les signaux IA et IB et les signaux IC et ID en des signaux S1 et S2' qui sont mélangés en un signal S3' = IR dans un troisième mélangeur CGV3.

En référence à la Fig. 4, le dispositif mélangeur comprend également trois mélangeurs CGV1, CGV2 et CGV3 et une grille de commutation auxiliaire GRA permettant de combiner les quatre signaux IA, IB, IC et ID comme les dispositifs mélangeurs montrés aux Figs. 2 et 3, mais également de combiner certains de ces quatre signaux avec d'autres signaux IE, IF et IG sélectionnés par la grille GR.

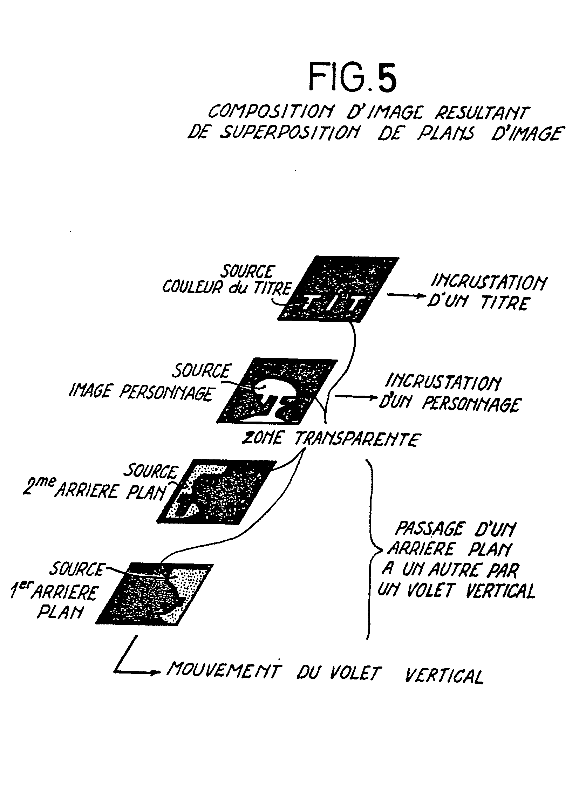

L'image résultante dans un dispositif mélangeur est conçue ainsi comme une superposition de plusieurs images circonscrites par des contours prédéterminés et contenues dans des plans superposés. La Fig. 5 montre la composition d'une image résultant de la superposition de quatre plans d'image P1 à P4 destinés à incruster un titre, un personnage, un second arrière-plan et un premier arrière-plan transmis par des sources vidéo sélectionnées par la grille GR.

Dans les dispositifs mélangeurs selon l'état de la technique antérieure, le contour de l'image résultante sortant d'un mélangeur CGV est déterminé par un signal d'effet, et l'apparition et la disparition de l'image résultante est déterminée par l'enchaînement choisi. L'image intérieure au contour est fournie par la source vidéo sélectionnée reliée à l'une des deux entrées du mélangeur et l'image extérieure au contour est fournie par la source vidéo sélectionnée reliée à l'autre entrée du mélangeur. Pour composer une image avec plusieurs images contenues dans des contours différents, la réflexion par superposition de plans n'est pas immédiate. Une telle composition exige au moins une grille de commutation GR à large bande de l'ordre de 6 MHz dont le coût est élevé, et nécessite des combinaisons de mélangeurs élémentaires CGV introduisant des temps de transit différents pour les divers enchaînements des signaux vidéo sélectionnés, et par suite, des déphasages entre ces signaux en sortie du dispositif mélangeur sont répercutés dans l'image résultante.

Par ailleurs, les paires de signaux de commande CA et CB dans les mélangeurs sont indépendantes les unes des autres. Sachant que les signaux vidéo entrants, mais également le signal vidéo résultant sont normalisés, c'est-à-dire ont des amplitudes comprises entre des limites prédéterminées, l'amplitude du signal résultant risque de surpasser les limites prédéterminées et doit donc être écrêté ce qui entraîne des défauts dans l'image résultante. Il en résulte que la superposition des plans d'image impose une somme des signaux entrants ayant transité dans les mélangeurs CGV comprise dans les limites prédéterminées afin d'éviter tout écrêtage du signal résultant : par exemple, lors de plusieurs effets, les signaux de commande doivent être soumis à des conditions de complémentarité, afin d'éviter tout souligné noir ou blanc au niveau des images découpées et enchaînées.

La présente invention vise à fournir un dispositif mélangeur, semblable à un mélangeur élémentaire défini ci-dessus, mais ayant au moins autant d'entrées qu'il y a de sources vidéo, ne comprenant pas de grille de commutation des signaux vidéo afin d'éliminer toutes différences de temps de transit des signaux vidéo à travers le dispositif, et en outre, remédiant à tout défaut de complémentarité entre transitions de signaux de commande, appelés dans la suite "signaux de découpe".

A ces fins, un dispositif pour mélanger plusieurs signaux vidéo entrants en un signal vidéo résultant représentant une image résultant de la superposition d'images représentées par des signaux vidéo entrants, est caractérisé en ce qu'il comprend plusieurs moyens pour établir des signaux de découpe d'image analogiques ayant des amplitudes comprises entre des niveaux bas et haut, la somme des amplitudes des signaux de découpe étant inférieure au niveau haut, des moyens de commutation pour sélectionner les signaux de découpe afin d'associer à chacun des signaux vidéo entrants un signal de découpe associé, et plusieurs moyens recevant respectivement les signaux vidéo entrants pour les atténuer respectivement par des facteurs d'atténuation fonction des signaux de découpe associés afin de transmettre le signal résultant par une borne de sortie commune aux moyens pour atténuer, la somme des facteurs d'atténuation étant égale à l'unité.

Selon l'invention, les signaux vidéo entrants sont appliqués directement, sans l'intermédiaire d'une grille de commutation à large bande, aux entrées des moyens pour atténuer respectivement. L'attribution des découpes d'image élaborées dans les moyens pour établir aux signaux vidéo entrants est effectuée par l'intermédiaire de moyens de commutation sous la forme d'une grille de commutation ayant une largeur de bande relativement réduite, de l'ordre de 1,5 MHz nécessaire à la transmission des signaux de découpe.

Selon une caractéristique de l'invention, les moyens pour atténuer comprennent des circuits à résistance variable, tels que transistors à effet de champ, ayant des entrées recevant respectivement les signaux entrants et des sorties reliées à ladite borne commune transmettant le signal résultant, et commandés en tension respectivement par lesdits signaux de découpe associés.

Afin d'obtenir une complémentarité des signaux de découpe entre niveaux haut et niveaux bas, quels que soient les enchaînements et effets sélectionnés et le nombre d'images superposées, chacun des moyens pour établir comprend un sommateur-inverseur analogique pour produire un signal complémentaire au niveau haut de la somme des signaux de découpe destinés à découper des images dans des plans superposés au-dessus du plan de l'image découpée par le signal de découpe établi par le moyen pour établir, et des moyens recevant un signal analogique d'effet ecrêté au niveau haut et ledit signal complémentaire de ladite somme de signaux de découpe pour produire ledit signal de découpe sensiblement égal au plus petit de ces deux signaux.

Le dispositif mélangeur permet également d'introduire dans le signal résultant des signaux de référence et de synchronisation, tels que ceux rencontrés dans des signaux vidéo classiques selon l'un des standards PAL et NTSC, ou dans des signaux vidéo récents du type MAC. Cette introduction est réalisée au moyen d'un signal vidéo d'image noire également appliqué à une entrée déterminée du dispositif mélangeur. Le signal d'image noire est également utilisé pour réaliser des fondus au noir d'images, c'est-à-dire des fondus enchaînés au noir, ce qui permet l'utilisation d'un même et unique potentiomètre pour réaliser des fondus enchaînés et des fondus au noir. Ainsi, selon d'autres caractéristiques de l'invention, chacun des moyens pour établir comprend des moyens activés par un signal de commande de fondu au noir et recevant un signal d'enchaînement au noir pour fournir un signal de commande de niveau noir variant de façon complémentaire à un signal de découpe de plan prédéterminé relativement au signal d'enchaînement au noir et constituant ledit signal de découpe. Dans ce cas, le dispositif mélangeur comprend des moyens pour additionner les signaux de commande de niveau de noir fournis par les moyens pour établir en un signal de commande d'image noire, et un moyen recevant un signal vidéo entrant représentant une image noire, relié à ladite borne commune et analogue aux autres moyens pour atténuer, pour atténuer le signal représentant l'image noire en fonction du signal de commande d'image noire, et des moyens pour imposer le niveau bas aux signaux de découpe et le niveau haut au signal de commande d'image noire pendant des intervalles de synchronisation et de suppression de ligne et trame.

D'autres avantages et caractéristiques de l'invention apparaîtront plus clairement à la lecture de la description suivante de plusieurs réalisations préférées de l'invention en référence aux dessins annexés correspondants dans lesquels :

- les Figs. 1, 2, 3 et 4 sont des blocs diagrammes schématiques de dispositifs mélangeurs selon la technique antérieure, commentés précédemment ;
- la Fig. 5 est un diagramme de plans d'image superposés déjà commenté ;
- la Fig. 6 est un bloc-diagramme schématique d'un dispositif mélangeur pour signaux vidéo codés, selon l'invention ;
- la Fig. 7 est un circuit équivalent à des multiplieurs analogiques de signal vidéo et de découpe inclus dans le dispositif mélangeur ;
- la Fig. 8 montre deux signaux de découpe ;
- les Figs. 9A et 9G montrent en détail divers circuits analogiques élémentaires mis en oeuvre dans des circuits opérateurs inclus dans le dispositif mélangeur ;
- la Fig. 10 est un bloc-diagramme détaillé d'un circuit opérateur ;
- la Fig. 11 est un diagramme schématique d'images superposées découpées par des signaux de découpe établis par des circuits opérateurs ;
- la Fig. 12 est un bloc-diagramme schématique d'un dispositif mélangeur selon l'invention, destiné à permuter deux signaux résultants à transmettre vers une antenne et des moyens de visualisation dans une régie ;
- la Fig. 13 montre une ligne de télévision avec mire de barres de couleur et une ligne de télévision pour image noire relatives à un signal vidéo PAL ;
- la Fig. 14 est un bloc-diagramme schématique d'un dispositif mélangeur selon l'invention, recevant des signaux composants entrants associés à des couleurs primaires; et
- la Fig. 15 montre une ligne de télévision d'une image quelconque et une ligne de télévision d'une image noire relatives à un signal MAC connu.

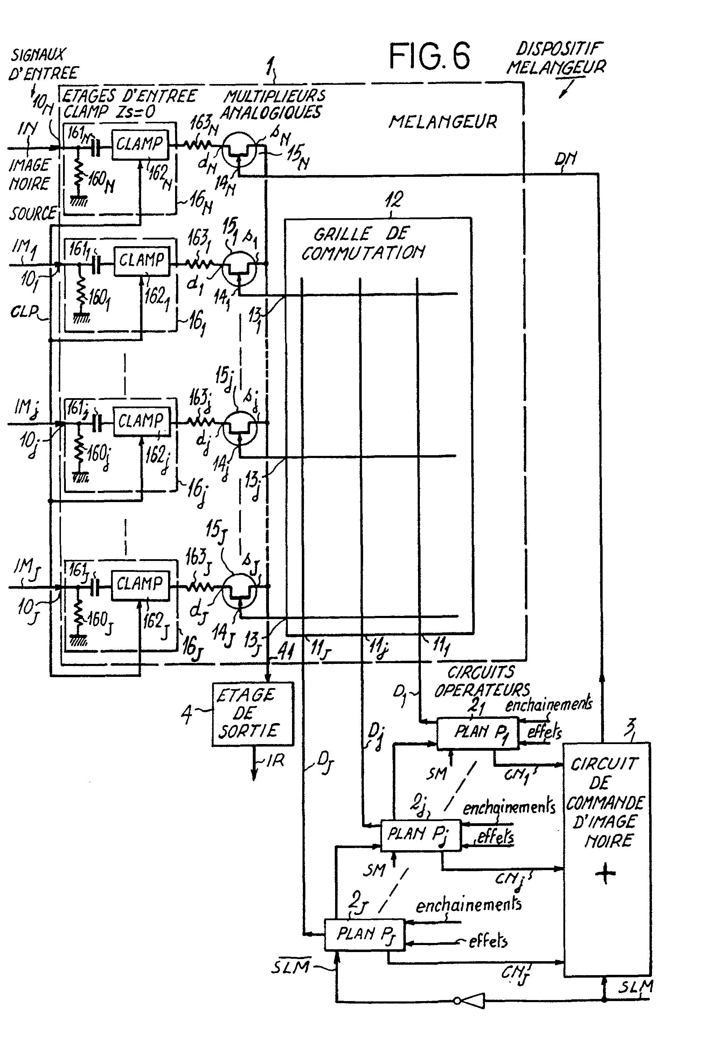

En référence à la Fig.6, un dispositif mélangeur selon l'invention reçoit J signaux d'image de télévision en couleurs $IM_1$ à $IM_J$ par des bornes d'entrée vidéo $10_1$ à $10_J$ d'un mélangeur 1. Le mélangeur 1 reçoit également un signal d'image noire IN par une borne d'entrée vidéo $10_N$. Dans la suite, on supposera que les signaux d'image sont de même nature et peuvent être par exemple des signaux vidéo codés selon un standard de télévision connu ; différentes applications relatives à divers signaux entrant dans le mélangeur 1 sont envisagées après la présente description détaillée. Les signaux d'image ont une amplitude crête-à-crête normalisée entre 0 et 1 volt. Pour ce qui concerne au moins des parties actives des signaux d'image convoyant une image, l'amplitude est comprise entre une tension de 0,3 volt définissant une image transparente ou image noire et une tension de $V_{max}$ = 1 volt définissant une image blanche. Les signaux d'image peuvent être fournis par des sources vidéo synchrones et en phase telles que caméras vidéo, magnétoscopes et autres appareils utilisés dans une régie de production pour studio de télévision.

Outre le mélangeur 1, le dispositif mélangeur comprend J circuits opérateurs $2_1$ à $2_J$ établissant des signaux dits de découpe de plan d'image $D_1$ à $D_J$ et des signaux dits de commande de niveau noir $CN_1$ à $CN_J$, un circuit de commande d'image noire 3, et un étage de sortie 4 délivrant un signal d'image résultante IR.

Chaque circuit opérateur $2_1$ à $2_J$ reçoit notamment des signaux d'effet et des signaux de commande d'enchaînement afin de les combiner pour produire un signal de découpe respectif $D_1$ à $D_J$ définissant un "contour" et des modifications d'image dans un plan d'image associé $P_1$ à $P_J$ à l'un des signaux d'image entrants $IM_1$ à $IM_J$. Ainsi, le mélange de signaux d'image $IM_1$ à $IM_J$ résulte de la superposition de J plans d'image $P_1$ à $P_J$, où $P_1$ est le premier plan supérieur et $P_J$ le dernier plan inférieur, afin de produire une image résultante. Pendant les intervalles de suppression de ligne et de trame indiqués par l'état "1" d'un signal logique SLM, tous les plans d'image sont rendus transparents, et le signal d'image résultante est composé uniquement du signal d'image noire IN.

Dans le mélangeur 1, les signaux de découpe $D_1$ à $D_J$ délivrés par les circuits opérateurs sont appliqués à J entrées de colonne $11_1$ à $11_J$ d'une grille ou matrice de commutation 12 ayant des sorties de rangée $13_1$ à $13_J$ reliées à des entrées de commande $14_1$ à $14_J$ de multiplieurs analogiques $15_1$ à $15_J$ sensiblement équivalents à des amplificateurs ayant un gain variable inférieur ou égal à l'unité. Les multiplieurs $15_1$ à $15_J$ reçoivent les signaux d'image entrant $IM_1$ à $IM_J$ à travers des étages d'entrée $16_1$ à $16_J$ et ont des bornes de sortie reliées à une borne d'entrée 41 de l'étage de sortie 4.

La grille de commutation 12 permet de "brasser" les contours d'image élaborés par les circuits opérateurs $2_1$ à $2_J$. La grille 12 est en pratique moins performante qu'une grille de commutation de signaux à vidéofréquences. En effet, les signaux de découpe $D_1$ à $D_J$ ont une bande passante plus réduite, typiquement ayant une largeur de l'ordre de 1,5 MHz, an lieu d'un minimum de 6 MHz pour une grille vidéo. En outre, les signaux de découpe sont moins sensibles à des phénomènes de diaphonie, typiquement de -26 dB au lieu de -50 dB, ceci étant dû au fait que les signaux de découpe $D_1$ à $D_J$ sont inactifs au delà de 0 et 1 volt. La grille de commutation 12 est ainsi plus facile à réaliser et nettement moins onéreuse. En pratique, la grille de commutation 12 est réalisée par des boîtiers ayant 4 commutateurs à commande verrouillée du type AD 7590 commercialisés par la société américaine Analog Device. Les commutations sont gérées par un microprocesseur simple, tel que le microprocesseur 8748 commercialisé par la société américaine INTEL, associé à des interfaces d'entrée-sortie du type 8243. Le nombre de circuits opérateurs est au plus égal au nombre maximum J de plans d'image à superposer pour obtenir une image résultante, et, en pratique, peut être égal ou inférieur au nombre de sources transmettant les signaux d'image à mélanger. Un circuit opérateur peut commander une découpe de l'un des signaux d'image à travers des sélections appropriées de points de commutation dans la grille 12. On supposera dans la suite que les signaux de découpe $D_1$ à $D_J$ sont sélectivement associés aux signaux entrants $IM_1$ à $IM_J$ par la grille de commutation 12.

Les signaux de découpe ont des amplitudes comprises entre un niveau bas choisi à 0 volt et un niveau haut choisi à 1 volt afin qu'un multiplieur analogique agisse comme un amplificateur ayant un gain variable compris entre 0 et 1. De même, des signaux dits d'effet, d'enchaînement, d'ombre, et d'effet de spot qui sont appliqués aux circuits opérateurs $2_1$ à $2_J$ et combinés dans ceux-ci, sont des signaux analogiques ayant de préférence des amplitudes comprises entre 0 et 1 volt, ou écrêtés entre ces tensions limites.

Comme montré schématiquement à la Fig.6, chaque multiplieur analogique $15_1$ à $15_j$ comprend une résistance variable qui varie en fonction de l'amplitude du signal de commande de découpe appliqué à son entrée $14_1$ à $14_J$ et sélectionné par la grille de commutation 12 parmi les signaux de découpe. Selon l'invention, la résistance variable est constituée par une résistance drain-source de transistor à effet de champ. Le transistor a une grille reliée à la borne $14_1$ à $14_J$, un drain $d_1$ à $d_J$ relié à la borne d'entrée $10_1$ à $10_J$ à travers l'étage d'entrée $16_1$ à $16_J$, et une source $s_1$ à $s_J$ reliée à la borne d'entrée 41 de l'étage de sortie 4. Tout autre composant à résistance variable peut être également utilisé.

En pratique, les étages d'entrée $16_1$ à $16_J$ et les multiplieurs analogiques $15_1$ à $15_J$ sont des circuits intégrés hybrides V 315 et V 316 commercialisés par la société français ALCATEL, et l'étage de sortie 4 est composé par un amplificateur opérationnel fonctionnant en adaptateur d'impédance.

L'étage d'entrée $16_1$ à $16_J$ a en entrée une résistance $160_1$ à $160_J$ ayant une valeur ohmique égale à l'impédance caractéristique d'un câble reliant la source vidéo correspondante délivrant le signal d'image $IM_1$ à $IM_J$ à la borne d'entrée $10_1$ à $10_J$, impédance typiquement égale à 75 ohms. L'étage d'entrée $16_1$ à $16_J$ comprend essentiellement un circuit d'alignement du niveau noir $162_1$ à $162_J$ qui est découplé de la borne d'entrée par un condensateur de liaison $161_1$ à $161_J$ pour des

tensions continues, et qui aligne le niveau noir du signal d'image $IM_1$ à $IM_J$ au potentiel de la masse grâce à des impulsions d'alignement CLP (clamp). Les impulsions CLP sont fournies par des circuits bien connus utilisés dans une régie de télévision, délivrant également divers signaux synchrones nécessaires au dispositif mélangeur et notamment aux circuits opérateurs $2_1$ à $2_J$. En sortie, l'étage d'entrée offre une impédance de sortie très faible, inférieure à 20 ohms, afin d'appliquer à l'étage de sortie 4, à travers une résistance série $163_1$ à $163_J$ et le multiplieur analogique associé $15_1$ à $15_J$, le signal d'image $IM_1$ à $IM_J$ ayant subi une atténuation dépendante du signal de commande correspondant. Les résistances $163_1$ à $163_J$ homogénéisent diverses résistances de sortie des étages d'entrée et ont une valeur ohmique typiquement de 47 ohms.

Chaque multiplieur $15_1$ à $15_J$ est analogue à un commutateur-mélangeur analogique à vitesse de commutation variable décrit dans le brevet français FR-B-2 484 109 dans lequel un seul transistor à effet de champ intervient.

L'étage de sortie 4 offre une impédance d'entrée très élevée et une impédance de sortie égale à l'impédance caractéristiques de 75 ohms d'un câble convoyant le signal d'image résultante IR. En pratique, l'étage de sortie contient un amplificateur opérationnel à très large bande. Cet amplificateur opérationnel a pour rôle de corriger la caractéristique amplitude-fréquence du signal résultant sortant du mélangeur.

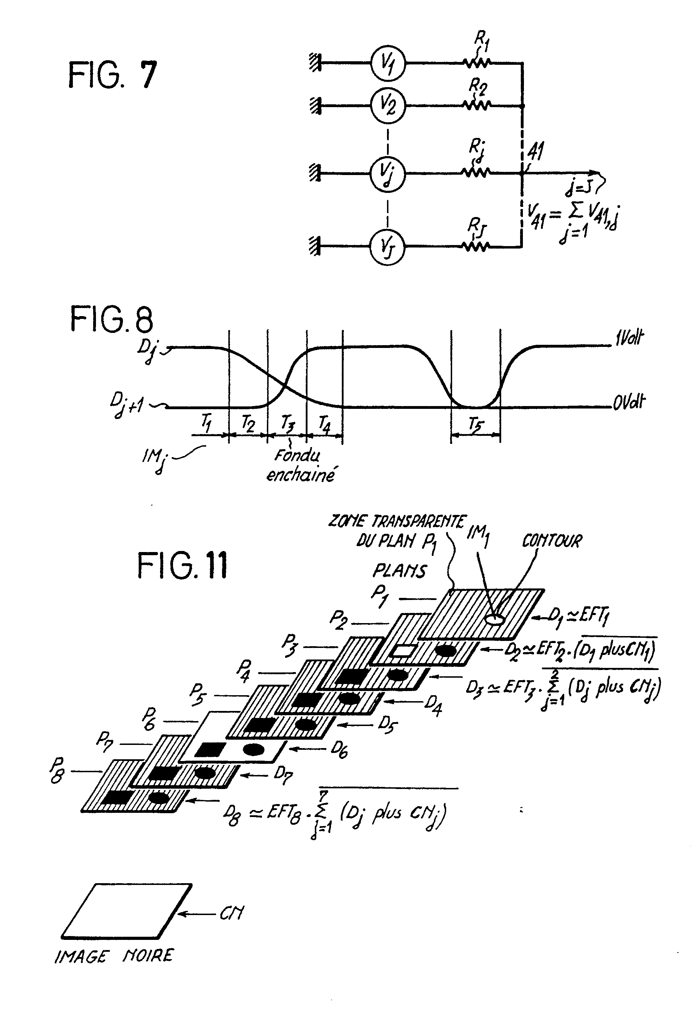

En référence à la Fig.7 montrant un circuit équivalent du mélangeur 1, dans lequel des sources de tension $V_1$ à $V_J$ représentent les étages d'entrée $16_1$ à $16_J$, et des résistances $R_1$ à $R_J$ représentent les résistances drains-sources des transistors à effet de champ dans les multiplieurs $15_1$ à $15_J$, on définit des conductances et résistances suivantes, où j est un indice compris entre 1 et J :

$$G_1 = 1/R_1 \;;... G_j = 1/R_j \;;... G_j = 1/R_J$$

$$G_{41} = G_1 + ... + G_j + ... + G_j = \text{conductance vue de la borne d'entrée 41 de l'étage de sortie} ;$$

$R'_j$ = résistance équivalente aux J-1 résistances $R_1,... R_{j-1}, R_{j+1},... R_J$ en parallèle ; et

$$G'_j = 1/R'_j, \text{ d'où } G_{41} = G'_j + G_j$$

La tension à la borne 41 donnée par $V_j$ est :

$$V_{41,j} = V_j.R'_j/(R_j + R'_j)$$

D'après les définitions précédentes, le dénominateur de l'équation précédente peut être remplacé par :

$$R_j + R'_j = 1/G_j + 1/G'_j = (G_j + G'_j)/(G_j.G'_j)$$

ou $R_j + R'_j = G_{41}/(G_j.G'_j)$

soit $V_{41,j} = V_j.G_j/G_{41}$

De même, pour j variant de 1 à J, on a :

$$V_{41,1} = V_1.G_1/G_{41}$$

$$V_{41,2} = V_2.G_2/G_{41}$$

$$....$$

$$V_{41,J} = V_J.G_J/G_{41}$$

En appliquant le principe de superposition des tensions, le signal $V_{41}$ à la borne 41 est dans le cas général :

$$V_{41} = (V_1.G_1 + V_2.G_2 + ...V_j.G_j + ...V_J.G_J)/G_{41}$$

Comme déjà dit, les signaux d'image ont une amplitude maximale $V_{max}$. La tension maximale à la borne 41 est alors :

$$VMAX_{41} = V_{max}(G_1 + G_2 + ...G_j + ...G_J)/G_{41}$$

soit $VMAX_{41} = V_{max}$

Il en résulte que, quelles que soient les amplitudes $V_1$ à $V_J$ des signaux d'image, le signal résultant IR a également une amplitude standard comprise dans les mêmes limites que celle des signaux d'image à mélanger même si la complémentarité des signaux de découpe au niveau haut "1" n'est pas assurée. En d'autres termes, quels que soient les niveaux des signaux de commande des multiplieurs et donc des signaux de découpe $D_1$ à $D_J$ et par conséquent des proportions des images composantes $IM_1$ à $IM_J$ dans l'image résultante IR, le signal d'image résultant n'a pas besoin d'être écrêté ce qui ne dénature pas les images mélangées.

Afin de fixer les idées, la Fig.8 illustre diverses combinaisons d'amplitudes, en particulier non complémentaires, de deux signaux de commande de découpage $D_j$ et $D_{j+1}$ destinés à mélanger par exemple deux signaux d'image entrants $IM_j$ et $IM_{j+1}$. Dans un intervalle de temps $T_1$, les signaux $D_j$ et $D_{j+1}$ sont respectivement au niveau haut à 1 volt et au niveau bas de blocage à 0 volt, et par suite l'image résultante n'est composée que de la première image $IM_j$. Dans un intervalle de temps $T_2$, le signal $D_{j+1}$ est à 0 volt et le signal $D_j$ décroît à partir de 1 volt ; le signal d'image atténué $IM_j$ traverse seul le mélangeur 1, le plan $P_{j+1}$ de l'image $IM_{j+1}$ étant transparent. Dans un intervalle de temps $T_3$, le signal $D_j$ continue à décroître vers le niveau bas ce qui correspond à une augmentation de la résistance $R_j$ du multiplieur associé $15_j$, tandis que le signal $D_{j+1}$ augmente du niveau bas vers le niveau haut ce qui correspond à une diminution de la résistance $R_{j+1}$ ; ces variations permettent de réaliser un fondu enchaîné afin de substituer l'image $IM_{j+1}$ à l'image $IM_j$ dans l'image résultante. Dans un intervalle de temps $T_4$, les signaux $D_j$ et $D_{j+1}$ atteignent respectivement les niveaux bas et haut, à l'inverse du mélange dans l'intervalle $T_1$, afin de terminer le fondu enchaîné dans l'intervalle $T_3$. Dans un intervalle de temps $T_5$, le signal $D_{j+1}$ est au niveau bas, tandis que le signal $D_j$ décroît jusqu'au niveau bas puis croît à partir du niveau bas ; pour cette combinaison, aucune image $IM_j$ et $IM_{j+1}$ n'est correctement transmise puisque les résistances des transistors dans les multiplieurs $15_j$ et $15_{j+1}$ tendent vers l'infini. Pour toutes les combinaisons précédentes, la somme des atténuations $\alpha_j = R_{j+1}/(R_j + R_{j+1})$ du signal $IM_j$ et $\alpha_{j+1} = R_j/(R_j + R_{j+1})$ est égale à 1.

Il est à noter que, lorsque tous les transistors à effet de champ dans les multiplieurs analogiques $15_1$ à $15_J$ sont bloqués, c'est-à-dire lorsque tous les plans d'image $P_1$ à $P_J$ sont transparents, le mélangeur 1 restitue le signal d'image noire IN à la borne 41. Dans ce cas, et également pendant des intervalles de de suppression de ligne et trame d'un signal vidéo définis par le signal SLM comme on le verra dans la suite, le circuit de commande d'image noire 3 applique un signal DN à une entrée de commande $14_N$ d'un multiplieur analogique $15_N$ inclus dans le mélangeur 1. Comme montré à la Fig.6, l'entrée d'image noire $10_N$ est reliée à la borne d'entrée 41 de l'étage de sortie 4 à travers un étage d'entrée $16_N$ et le multiplieur $15_N$ qui sont respectivement identiques aux étages $16_1$ à $16_J$ et aux multiplieurs $15_1$ à $15_J$ décrits précédemment. Ainsi, si aucune image $IM_1$ à $IM_J$ n'est transmise, le signal d'image noire IN est seul appliqué à la borne 41.

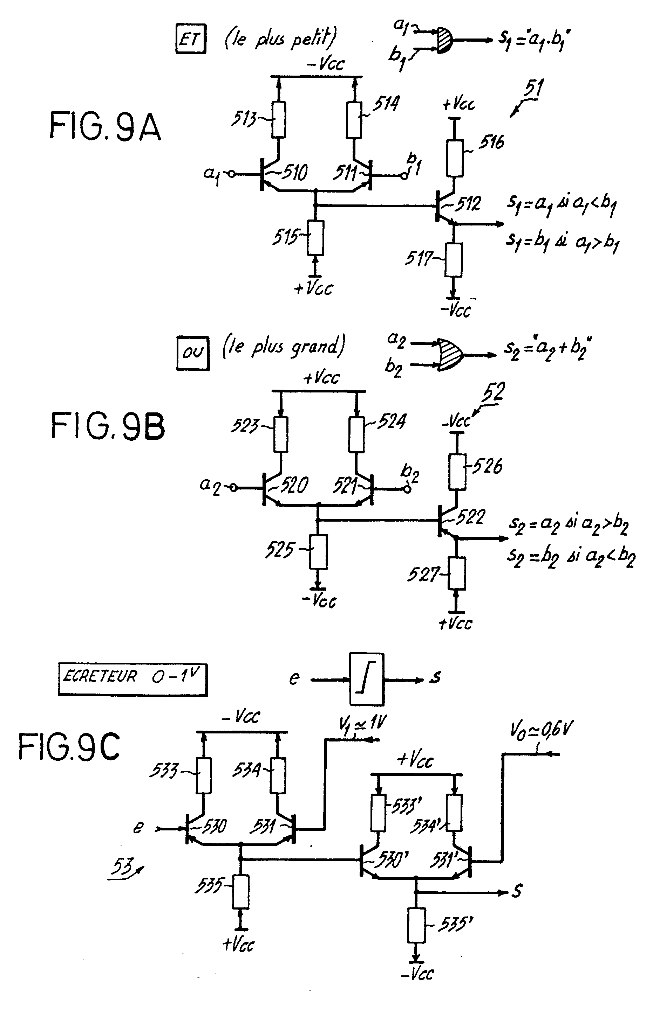

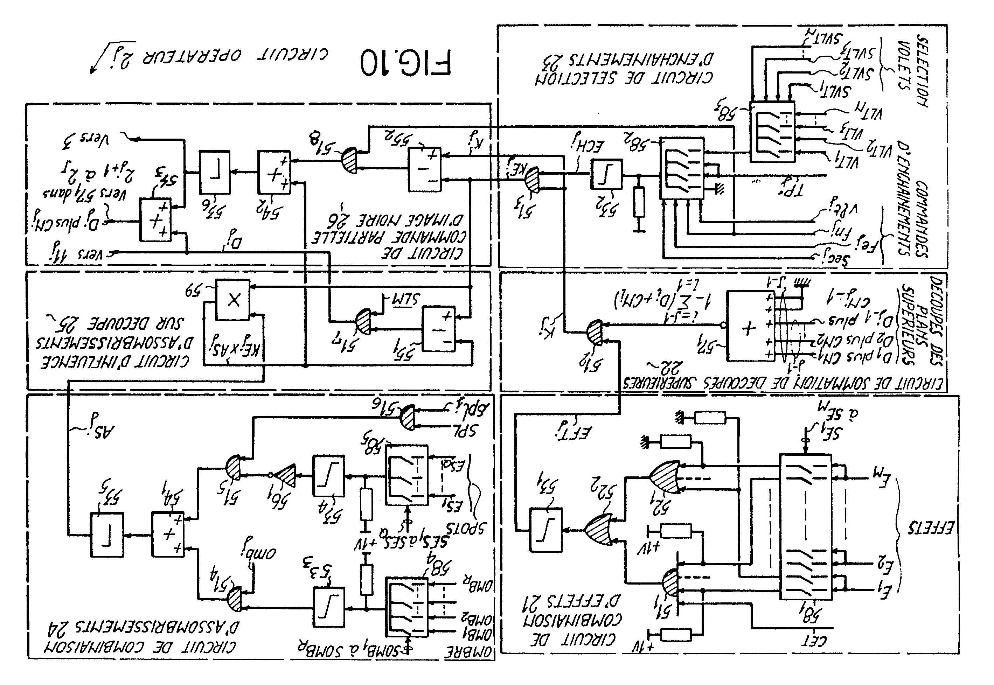

On décrit maintenant l'un, $2_j$, des circuits opérateurs $2_1$ à $2_J$ qui sont tous identiques. Le circuit opérateur $2_j$ inclut des circuits analogiques élémentaires montrés aux Figs.9A à 9G pour établir le signal de commande de niveau noir $CN_j$ en fonction de divers signaux d'effets, d'enchaînement, d'ombre et d'effet de spot, et de signaux d'ordres sélectionnant le signaux précédents, ainsi qu'en fonction des signaux $CN_1$ à $CN_{j-1}$ et $D_1$ à $D_{j-1}$ établis par les circuits opérateurs $2_1$ à $2_{j-1}$ correspondant aux plans d'image supérieurs $P_1$ à $P_{j-1}$ superposés au-dessus du plan d'image $P_j$. Tous les divers signaux précités reçus et établis par le circuit opérateur sont des signaux analogiques ayant des amplitudes comprises normalement entre le niveau bas à 0 volt et le niveau haut à 1 volt. En outre, on notera que les circuits élémentaires détaillés dans les Figs.9A à 9G sont associés à des représentations symboliques que l'on retrouve dans la Fig.10 montrant un bloc-diagramme détaillé du circuit opérateur $2_j$. Dans les Figs.9A à 9G, +Vcc et -Vcc désignent des tensions d'alimentation typiquement à +12 volts et -12 volts.

Comme montré à la Fig.9A, un circuit 51 pour sélectionner un signal ayant la plus petite amplitude parmi deux signaux entrants analogiques $a_1$ et $b_1$ comprend deux transistors d'entrée 510 et 511 et un transistor de sortie 512. Les transistors 510 et 511 sont des transistors bipolaires pnp ayant des bases recevant les signaux $a_1$ et $b_1$, des collecteurs polarisés à -Vcc à travers des résistances égales 513 et 514, et des émetteurs couplés polarisés à +Vcc à travers une résistance 515. Le transistor de sortie 512 est un transistor bipolaire npn ayant une base reliée aux émetteurs des transistors 510 et 511, un collecteur polarisé à +Vcc directement ou à travers une résistance 516, et un émetteur constituant la sortie du circuit 51, polarisé à -Vcc à travers une résistance 517. L'émetteur du transistor 512 délivre un signal sortant $s_1$ tel que :

$s_1 = a_1$ lorsque $a_1 < b_1$, et
$s_1 = b_1$ lorsque $a_1 > b_1$

Pour ces raisons, le circuit 51 est symbolisé par une "porte ET analogique" délivrant un signal $s_1 = "a_1.b_1"$.

Un circuit 52 effectuant une opération réciproque à celle du circuit 51 est montré à la Fig.9B. Le circuit 52 sélectionne un signal ayant la plus grande amplitude parmi deux signaux entrants analogiques $a_2$ et $b_2$ afin de délivrer un signal sortant $s_2$ tel que :

$s_2 = a_2$ lorsque $a_2 > b_2$, et
$s_2 = b_2$ lorsque $a_2 < b_2$

Le circuit 52 est ainsi symbolisé par une "porte OU analogique" délivrant un signal $s_2 = "a_2 + b_2"$. Le circuit 52 comprend deux transistors d'entrée 520 et 521, un transistor de sortie 522, et des résistances 523 à 527 agencés de la même manière que les composants analogues 510 à 517 dans le circuit 51. Cependant les transistors 520 et 521 sont des transistors bipolaires npn ayant des collecteurs et émetteurs polarisés à +Vcc et -Vcc, et le transistor 522 est un transistor bipolaire pnp ayant des collecteur et émetteur polarisés à -Vcc et +Vcc.

Lorsqu'un circuit ET, respectivement un circuit OU a M entrées recevant respectivement M signaux entrants, il comprend M transistors d'entrée ayant des émetteurs couplés à la base du transistor de sortie dont l'émetteur délivre, comme signal sortant, le signal d'entrée ayant la plus petite, respectivement la plus grande amplitude.

Un écrêteur 53 pour écrêter un signal entrant e entre le niveau bas à 0 volt et le niveau haut à 1 volt est montré à la Fig.9C. L'écrêteur est la réunion d'un circuit ET et d'un circuit OU en cascade, ou en d'autres termes, d'un premier écrêteur à un niveau haut et d'un second écrêteur à un niveau bas, afin que le circuit ET formant le premier écrêteur sélectionne la plus petite amplitude entre celles du signal entrant e et d'un signal continu entrant $V_1 = 1$ volt, et que le circuit OU formant le second écrêteur sélectionne la plus grande amplitude entre celles d'un signal sortant du circuit ET et d'un signal continu entrant de niveau faible, typiquement à $V_0 = 0,6$ volt $< V_1$, ce qui permet de délivrer un signal sortant s ayant une amplitude comprise entre 0 et 1 volt. Selon la réalisation illustrée à la Fig.9C, l'écrêteur 53 comprend deux transistors 530 et 531 et trois résistances 533, 534 et 535 agencés de la même manière que les composants 510, 511, 513, 514 et 515 dans le circuit ET 51, et deux transistors 530' et 531' et trois résistances 533', 534' et 535' agencés de la même manière que les composants 520, 521, 523, 524 et 525 dans le circuit OU 52. Les bases des transistors 530 et 531 reçoivent les signaux e et $V_1$. Les bases des transistors 530' et 531' reçoivent le signal fourni par les émetteurs couplés des transistors 530 et 531, et le signal $V_0$. Les émetteurs couplés des transistors 530' et 531' délivrent le signal sortant s.

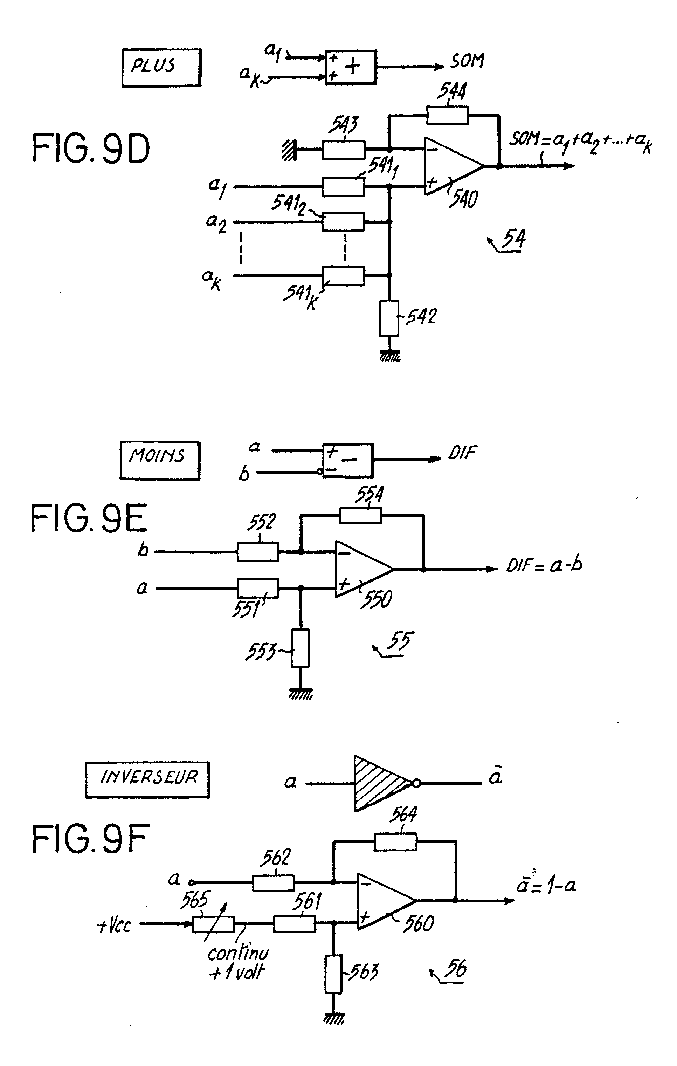

Un additionneur analogique 54 est montré à la Fig.9D. Il comprend classiquement un amplificateur opérationnel 540 ayant une entrée directe (+) reliée à des résistances d'entrée $541_1$ à $541_K$ recevant K signaux entrants $a_1$ à $a_K$, et reliés à une résistance de mise à la terre 542. Une entrée inverse (-) de l'amplificateur 540 est reliée à une résistance de mise à la terre 543 et à une résistance de contre-réaction 544, cette dernière ayant une borne reliée à une sortie de l'amplificateur 540 délivrant un signal de somme $SOM = a_1 + a_2 + ... + a_K$.

Comme montré à la Fig.9E, un soustracteur analogique 55 pour établir un signal de différence $DIF = a-b$ à partir de deux signaux entrants a et b comprend classiquement un amplificateur opérationnel 550 ayant des entrées directe (+) et inverse (-) reliées à des résistances d'entrée 551 et 552 recevant les signaux a et b respectivement. L'entrée directe (+) est reliée à la terre à travers une résistance 553. L'entrée inverse (-) est reliée, à travers une résistance de contre-réaction 554, à la sortie de l'amplificateur 550 délivrant le signal de différence DIF.

Comme montré à la Fig.9F, à partir du soustracteur 55 est réalisé un inverseur analogique 56 délivrant un signal complémentaire à 1 volt, $"\bar{a}" = 1-a$, à partir d'un signal entrant a. L'inverseur 56 comprend des composants 560 à 564 respectivement analogues aux composants 550 à 554 et agencés de la même manière. L'entrée inverse (-) de l'amplificateur 560 reçoit le signal a à travers la résistance d'entrée 562. L'entrée directe (+) de l'amplificateur 560 reçoit une tension continue à 1 volt à travers la résistance d'entrée 561, cette tension continue étant obtenue à partir de la tension +Vcc à travers un potentiomètre 565.

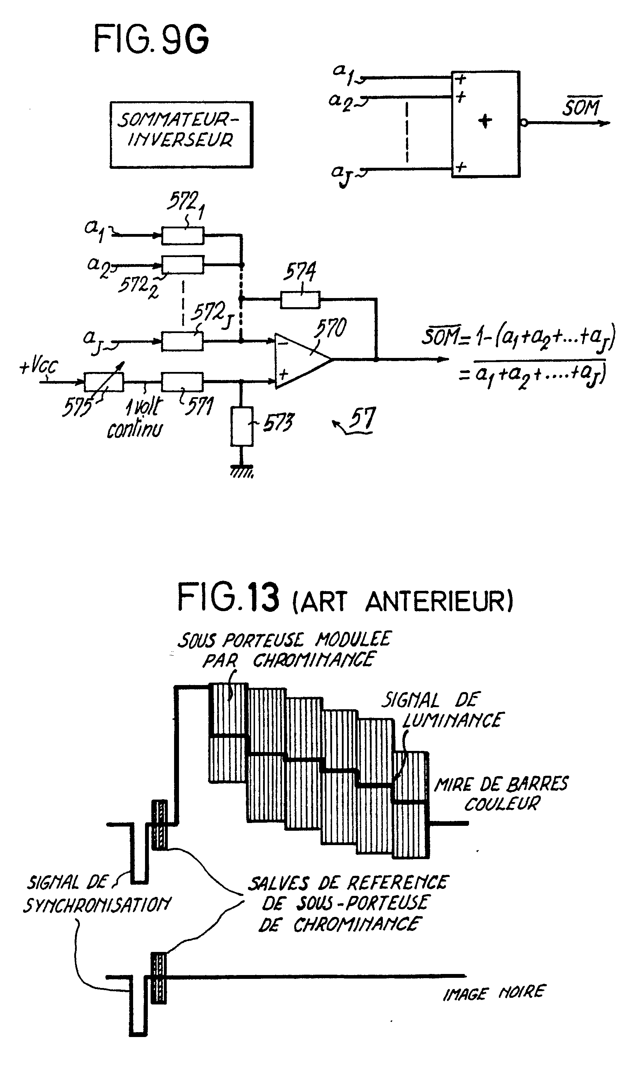

Comme montré à la Fig.9G, à partir de l'inverseur 56, est réalisé un sommateur-inverseur 57 délivrant un signal de somme complémentaire à 1 volt $\overline{SOM} = \bar{a_1} + \bar{a_2} + ... + \bar{a_J} = 1-(a_1 + a_2 + ... a_J)$, à partir de J signaux entrants $a_1$ à $a_J$. Le sommateur-inverseur 57 comprend des composants 570, 571, 573, 574 et 575 respectivement analogues aux composants 560, 561, 563, 564 et 565 dans l'inverseur 56 et agencés de la même manière. Des résistances d'entrée $572_1$ à $572_J$ remplacent la résistance 562, sont reliées à l'entrée inverse (-) de l'amplificateur 570, et reçoivent les signaux entrants $a_1$ à $a_J$.

En référence maintenant à la Fig.10, le circuit opérateur $2_j$ comprend un circuit de combinaison d'effets 21, un circuit de sommation de découpes supérieures 22, un circuit de sélection d'enchaînements 23, un circuit de combinaison d'assombrissements 24, un circuit d'influence d'assombrissements sur découpe 25, et un circuit de commande partielle d'image noire 26.

Le circuit de combinaison d'effets 21 reçoit M signaux analogiques d'effets spéciaux pour télévision en couleurs $E_1$ à $E_M$. Les signaux d'effets proviennent de générateurs électroniques d'effets, tels que des systèmes connus d'incrustation d'images de télévision et des systèmes de surimpression d'images. Un effet est destiné par exemple à incruster une image d'avant-scène, telle que personnage, dans une image d'arrière-scène, telle que décors, ou à incruster un médaillon ou un titre dans une image, ou à combiner en surimpression une image sensiblement transparente, tel qu'un fantôme ou un rideau de pluie, sur une autre image, telle qu'une scène. Les signaux d'effets $E_1$ à $E_M$ sont sélectionnés par des signaux logiques de sélection d'effets $SE_1$ à $SE_M$ dans un double circuit de commutation ou double multiplexeur $58_1$. Selon la réalisation illustrée, deux combinaisons des signaux d'effets sélectionnés sont réalisées par un circuit ET $51_1$ ayant M entrées et par un circuit OU $52_1$ ayant M entrées, bien que d'autres combinaisons puissent être envisagées. M paires d'entrées des circuits $51_1$ et $52_1$ sont reliées à M paires de sortie du circuit $58_1$, et une borne de commande du circuit ET $51_1$ reçoit un signal de commande CET. Des sorties des circuits $51_1$ et $52_2$ sont reliées, à travers un circuit OU à deux entrées $52_2$, à un écrêteur à deux niveaux $53_1$ ayant une sortie délivrant un signal d'effets combinés $EFT_j$ ayant une amplitude comprise entre 0 et 1 volt.

Si aucun signal d'effet n'est sélectionné dans le circuit $58_1$ pour être combiné dans le circuit OU $52_1$, la sortie du circuit $52_1$ est au niveau bas "0". Par contre, si aucun signal d'effet n'est sélectionné dans le circuit $58_1$ pour être combiné dans le circuit ET $51_1$, la sortie du circuit $51_1$ est au niveau haut "1". Le niveau du signal de commande CET sélectionne ainsi les activations des circuits $51_1$ et $52_1$. Si le circuit ET $51_1$ est seul opérant, le signal CET est au niveau "1", et une sélection de deux combinaisons d'effets identiques réalisés par les circuits $51_1$ et $52_1$ est interdite. Si le circuit OU $52_1$ est seul opérant, le signal CET est au niveau "0". Si on cherche à obtenir une image couvrant la totalité du plan image, c'est-à-dire un signal $EFT_j$ toujours différent du 0 volt, le signal de commande CET est au niveau haut et toute sélection d'effets par le circuit ET $51_1$ via le circuit $58_1$ est interdite.

Le circuit de sommation de découpes supérieures 22 comprend un sommateur-inverseur à J-1 entrées $57_1$ et un circuit ET à deux entrées $51_2$. Le circuit $51_2$ a une entrée reliée à la sortie de l'écrêteur $53_1$ délivrant le signal d'effets combinés $EFT_j$ et une entrée reliée à la sortie du sommateur-inverseur $57_1$.

Pour le circuit opérateur $2_j$, le signal de découpe $D_j$ dans le plan image correspondant $P_j$ doit avoir une amplitude n'excédant pas le complément à 1 volt de la somme des signaux $(D_1 + CN_1)$ à $(D_{j-1} + CN_{j-1})$ afin que le signal résultant soit toujours compris dans l'intervalle d'amplitude standard, sans écrêtage. Pour ces raisons, comme illustré schématiquement à la Fig.11 pour J = 8 plans, l'insertion de l'image dans le plan $P_j$ doit tenir compte de la proportion des images dans les plans supérieurs $P_1$ à $P_{j-1}$ relativement à l'image résultante. En outre, comme on le verra dans la suite, il est tenu compte, pour chaque plan d'image supérieur, du signal de commande de niveau noir $CN_1$ à $CN_{j-1}$ qui contrôle par l'intermédiaire du circuit 3 et du multiplieur $15_N$ la proportion du niveau noir dans l'image résultante lors d'un fondu enchaîné au noir ou d'un assombrissement.

Ainsi, le sommateur-inverseur $57_1$ reçoit par j-1 entrées les signaux $D_1 + CN_1$ à $D_{j-1} + CN_{j-1}$ afin de produire un signal $1-((D_1 + CN_1) + ... + (D_{j-1} + CN_{j-1}))$. Les $(J-1)-(j-1)$ entrées restantes du sommateur-inverseur $57_1$ dans le circuit opérateur $2_j$ sont à la terre, c'est-à-dire à 0 volt ; ainsi lorsque j = 1 pour le circuit opérateur $2_1$, toutes les entrées du sommateur-inverseur inclus dans celui-ci sont à la terre. Le circuit ET $51_2$ délivre un signal $K_j$ qui est un signal de découpe résultant de la combinaison des effets sélectionnés dans le plan $P_j$ avant enchaînement et assombrissement et ayant une amplitude n'excédant pas le complément à 1 volt disponible pour insérer des images des plans inférieurs $P_j$ à $P_J$.

Le circuit de sélection d'enchaînements 23 est destiné à sélectionner dans le plan d'image $P_j$ un mode d'enchaînement connu parmi quatre par exemple, au moyen de quatre signaux logiques de commande d'enchaînement $sec_j$, $fe_j$, $fn_j$ et $vlt_j$. Chacun de ces signaux à l'état "1" commande la fermeture d'un commutateur élémentaire respectif parmi quatre inclus dans un commutateur ou multiplexeur analogique $58_2$.

Lorsque $sec_j = 1$, le commutateur $58_2$ délivre une tension nulle afin de rendre des portions du plan d'image $P_j$ transparentes, c'est-à-dire de supprimer totalement ces portions d'image, en vue de l'insertion d'images de plans inférieurs dans l'image résultante. Lorsque $sec_j = 0$, le signal $K_j$ est transmis intégralement à travers un circuit ET $51_3$ ayant une entrée reliée à la sortie du circuit ET

$51_2$, et une autre entrée reliée à la sortie du commutateur $58_2$ à travers un écrêteur à deux niveaux $53_2$.

Lorsque $fe_j$ ou $fn_j = 1$, le commutateur $58_2$ délivre un signal $TP_j$ qui a une amplitude variant typiquement entre 0 et 1 volt au moyen d'un potentiomètre. Le signal $fe_j$ commande un fondu enchaîné entre l'image dans le plan $P_j$ et une image sur un autre plan, et le signal $fn_j$ commande un fondu au noir pour l'image sur le plan $P_j$.

Lorsque $vlt_i = 1$, le commutateur $58_2$ relie la sortie d'un commutateur ou multiplexeur analogique $58_3$ à l'entrée de l'écrêteur $53_2$. Le commutateur $58_3$ reçoit N signaux de volet $VLT_1$ à $VLT_N$ sélectionnés respectivement par N signaux logiques de sélection de volet $SVLT_1$ à $SVLT_N$.

Lorsque tous les signaux de commande d'enchaînement sont à l'état "0", la sortie du commutateur $58_2$ délivre à travers l'écrêteur $53_2$ un signal d'enchaînement $ECH_j$ au niveau haut de 1 volt, et par suite, la sortie du circuit ET $51_3$ fournit un signal $KE_j = K_j$. Lorsque le signal $ECH_j$ est compris entre 0 et 1 volt suite à une commande d'enchaînement, le signal $KE_j$ correspond à une découpe du signal $K_j$ en fonction de l'enchaînement sélectionné, avant assombrissement éventuel dans le plan $P_j$, tout en conservant la complémentarité à 1 volt de l'image dans le plan $P_j$ par rapport à la superposition des images dans les plans supérieurs $P_1$ à $P_{j-1}$ grâce au circuit ET $51_3$.

Le circuit de combinaison d'assombrissements 24 est destiné à assombrir par un fondu enchaîné avec l'image noire, l'image dans le plan $P_j$, en arrêtant ce fondu à un niveau déterminé par l'un de R signaux d'ombre $OMB_1$ à $OMB_R$ ayant des niveaux prédéterminés compris entre 0 et 1 volt. Les signaux d'ombre $OMB_1$ à $OMB_R$ sont sélectionnés dans un commutateur ou multiplexeur analogique $58_4$ par des signaux logiques de sélection d'ombre $SOMB_1$ à $SOMB_R$ respectivement. Les signaux $OMB_1$ à $OMB_R$ sont par exemple fournis par des systèmes d'incrustation d'image. Le signal d'ombre sélectionné est écrêté en sortie du commutateur $58_4$ par un écrêteur à deux niveaux $53_3$ ayant une sortie reliée à une première entrée d'un circuit ET à deux entrées $51_4$. Une seconde entrée du circuit ET $51_4$ reçoit un signal logique de commande $omb_j$ qui, à l'état "0", inhibe la transmission du signal d'ombre sélectionné $OMB_1$ à $OMB_R$.

Le circuit 24 permet également d'assombrir partiellement l'image dans le plan $P_j$ afin de former un "spot" lumineux en vue, par exemple, de conserver l'éclairement sur un personnage et d'assombrir graduellement le reste des plans $P_j$ à $P_J$ autour du personnage et représentant une scène dans laquelle évolue le personnage. Le spot lumineux est obtenu à partir de l'un de Q signaux d'effet de spot $ES_1$ à $ES_Q$ sélectionnés respectivement par des signaux logiques de sélection d'effet de spot $SES_1$ à $SES_Q$ dans un commutateur ou multiplexeur analogique $58_5$. Le signal d'effet de spot sélectionné $ES_1$ à $ES_Q$ en sortie du commutateur $58_5$ est écrêté dans un écrêteur à deux niveau $53_4$ et inversé dans un inverseur $56_1$ pour être appliqué à une première entrée d'un circuit ET à deux entrées $51_5$. Une seconde entrée du circuit ET $51_5$ est reliée à un troisième circuit ET à deux entrées $51_6$ inclus dans le circuit de combinaison d'assombrissements 24. Les entrées du circuit ET $51_6$ reçoivent respectivement un signal de spot lumineux SPL ayant un niveau continu prédéterminé afin d'écrêter le signal d'effet de spot sélectionné $ES_1$ à $ES_Q$ à travers le circuit ET $51_5$, et un signal logique de commande $spl_j$ qui, à l'état "1", met en service l'effet de spot sélectionné, et, à l'état "0", inhibe cet effet de spot.

Dans le circuit 24, le signal d'ombre sélectionné $OMB_1$ à $OMB_R$ et le signal d'effet de spot sélectionné $ES_1$ à $ES_Q$ éventuellement écrêté par le signal SPL sont additionnés dans un additionneur $54_1$ ayant deux entrées reliées à des sorties des circuits ET $51_4$ et $51_5$ et une sortie reliée à une entrée d'un écrêteur à niveau haut $53_5$. L'écrêteur $53_5$ écrête au niveau haut de 1 volt afin d'assurer qu'un signal d'assombrissement $AS_j$ sortant de celui-ci soit inférieur à 1 volt. Le signal $AS_j$ est appliqué à une première entrée d'un circuit de multiplication analogique 59 d'un genre connu inclus dans le circuit 25.

L'assombrissement du plan $P_j$ est répercuté sur tous les plans inférieurs $P_{j+1}$ à $P_J$, ou en d'autres termes, les sélections de signaux d'ombre et de signaux d'effet de spot sont exécutées à l'identique dans les circuits opérateurs $2_j$ à $2_J$.

Le circuit d'influence d'assombrissements sur découpe 25 comprend un soustracteur $55_1$ ayant une entrée directe (+) reliée à la sortie du circuit ET $51_3$ et une entrée inverse (-) reliée à une sortie du circuit de multiplication analogique 59, un circuit ET $51_7$ ayant une entrée reliée à une sortie du soustracteur $55_1$ et une autre entrée recevant un signal $\overline{SLM}$, complémentaire du signal logique SLM, marquant des intervalles de suppression de ligne et trame des signaux d'image, et le circuit de multiplication 59 ayant une seconde entrée reliée à la sortie du circuit ET $51_3$.

Le circuit de multiplication 59 reçoit le signal d'assombrissement $AS_j$ ainsi que le signal $KE_j$ qui indique la découpe d'image dans le plan $P_j$ suite aux effets et enchaînements sélectionnés et combinés. Afin de fixer les idées, on suppose par exemple que l'image notamment dans le plan $P_j$ doit être assombrie dans une zone d'image intermédiaire de dégradé ou flou définie par $KE_j = 0,2$ volt, au moyen d'une ombre faible définie par un signal d'ombre sélectionné $OMB_1$ à $OMB_R$ tel que $AS_j =$

0,3 volt. En sortie du circuit 59, un signal $KE_j \times AS_j$ = 0,2 x 0,3 = 0,06 volt représente l'influence de l'ombre sur la découpe d'image et est soustrait au signal de découpe $KE_j$ dans le soustracteur $55_1$. Puis, à travers le circuit ET $51_7$, lorsque le signal $\overline{SLM}$ est à l'état "0", une mise à zéro du signal de découpe finale $D_j$ pour le plan d'image $P_j$ est assuré pendant les intervalles de suppression de ligne et trame. Le signal $D_j$ sortant du circuit ET $51_7$ est ainsi transmis par le circuit opérateur $2_j$ à l'entrée $11_j$ de la grille de commutation 12 dans le mélangeur 1.

Le circuit de commande partielle d'image noire 26 comprend un soustracteur $55_2$, un circuit à deux entrées ET $51_8$, un premier additionneur à deux entrées $54_2$, un écrêteur à niveau haut $53_6$ et un second additionneur à deux entrées $54_3$.

Des entrées directe (+) et inverse (-) du soustracteur $55_2$ reçoivent respectivement le signal $K_j$ en sortie du circuit ET $51_2$ et le signal $KE_j$ en sortie du circuit ET $51_3$ pour produire un signal de différence $K_j-KE_j$ appliqué à une première entrée du circuit ET $51_8$. Une seconde entrée du circuit ET $51_8$ reçoit le signal de commande de fondu au noir $fn_j$. Ainsi, lorsqu'un fondu au noir de l'image dans le plan $P_j$ est commandé par $fn_j = 1$, le signal de commande de niveau noir $K_j-KE_j$ transmis par le circuit $51_8$ varie de façon complémentaire au signal de découpe de plan $K_j$ relativement au signal d'enchaînement au noir $TP_j$, c'est-à-dire lorsqu'au niveau des transitions montantes et descendantes du signal $TP_j$ pour $TP_j < K_j$, le signal $K_j-KE_j$ est fonction de $K_j.(1-TP_j) = K_j-K_j.TP_j$. Lorsque $fn_j = 0$ et donc lorsqu'il n'y a pas de fondu enchaîné au noir, le circuit ET $51_8$ est bloqué.

En cas d'assombrissement dans une zone d'image, le signal $KE_j \times AS_j$ représente l'atténuation du signal de découpe de plan. Dans cette zone, il y a un fondu enchaîné de l'image de plan avec l'assombrissement $KE_j \times AS_j$. Pour tenir compte de cet assombrissement dans le signal de commande $CN_j$, la sortie du circuit de multiplication 59 est reliée à une première entrée de l'additionneur $54_2$. Dans le cas où il y a à la fois un fondu au noir et à un assombrissement, ces deux effets sont additionnés par l'additionneur $54_2$, celui-ci ayant une seconde entrée reliée à la sortie du circuit ET $51_8$. Le signal de commande de niveau noire $CN_j$ délivré par la sortie de l'additionneur $54_2$ est écrêté à 1 volt dans l'écrêteur $53_6$. Puis le signal $CN_j$ est appliqué, d'une part à une entrée du circuit de commande d'image noire 3 afin d'être additionné aux autres signaux $CN_1$ à $CN_J$ en le signal DN, d'autre part à une entrée de l'additionneur $54_3$ ayant une autre entrée recevant le signal $D_j$ par la sortie du circuit ET $51_6$ afin d'appliquer le signal $D_j + CN_j$ aux sommateurs-inverseurs $57_1$ dans les circuits opérateurs $2_{j+1}$ à $2_J$ et ainsi éliminer la baisse du niveau du signal de découpe $D_j$ lors des fondus au niveau noir et des assombrissements, ombres ou zones autour de spots.

Il est à noter que pendant les intervalles de synchronisation et suppression de ligne et trame, le niveau à 1 volt est imposé par le signal SLM au signal DN élaboré par le circuit de commande d'image noire 3 afin de permettre le passage notamment de signaux de référence de couleurs convoyés par le signal d'image noire IN.

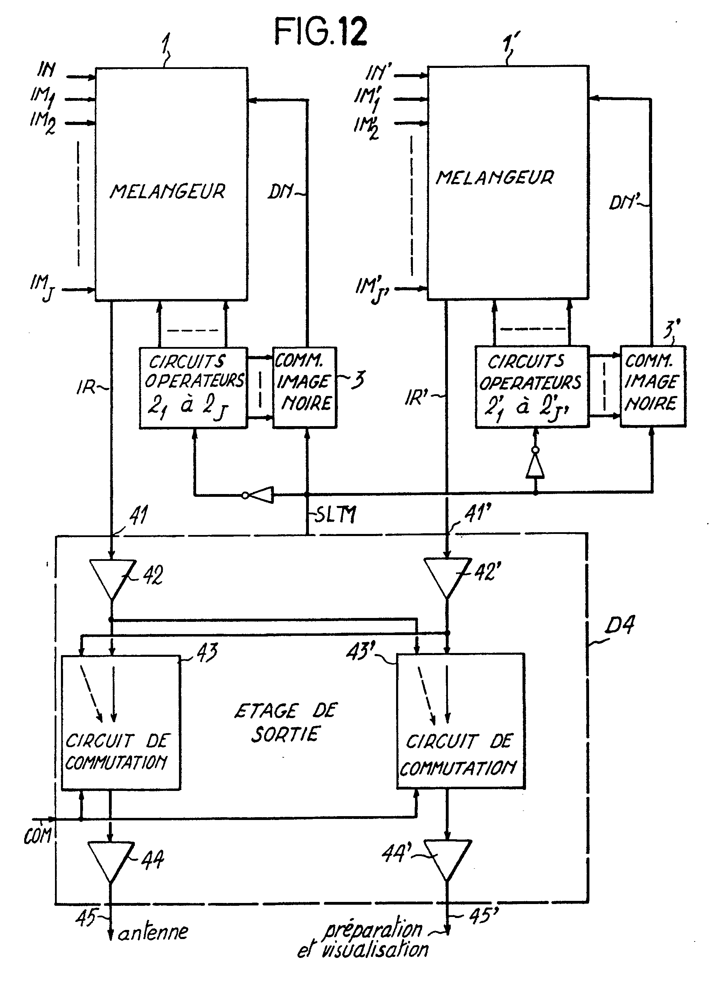

Selon une seconde réalisation montrée schématiquement à la Fig. 12, un dispositif mélangeur comprend un second mélangeur 1' recevant un signal d'image noire IN' et J' signaux d'image de télévision en couleurs $IM_1$ à $IM_J$, et un ensemble de J' circuits opérateurs $2'_1$ à $2'_J$, et un circuit de commande d'image noire 3' commandant le mélangeur 1'. Les signaux IN, IN', $IM_1$ à $IM_J$ et $IM'_1$ à $IM'_J$, sont synchrones avec le signal SLM. Les nombres J et J' peuvent être égaux ou différents et les sources vidéo transmettant les signaux vidéo entrants peuvent être les mêmes ou être différentes relativement aux deux mélangeurs. Selon cette seconde réalisation, le dispositif mélangeur comprend un double étage de sortie D4 permettant de commuter à la demande les signaux IR et IR' sortant des mélangeurs 1 et 1' et résultant de combinaisons des signaux vidéo entrants IN et $IM_1$ à $IM'_1$ et IN' et $IM'_1$ à $IM'_J$ respectivement, afin de transmettre au choix l'un des signaux IR et IR' à une antenne de télédiffusion et l'autre de ces signaux à un moniteur de télévision en vue de préparer les images à télédiffuser.

L'étage de sortie D4 offre deux bornes d'entrée 41 et 41' recevant les signaux IR et IR' pour les appliquer respectivement à deux amplificateurs opérationnels 42 et 42' du type TDB 2022 déjà cité. La commutation, ou plus précisément la permutation des signaux IR et IR', est réalisée au moyen de deux circuits de commutation 43 et 43', tels que celui décrit dans le FR-B-2 484 109. Des drains de deux transistors à effet de champ dans chacun des circuits 43 et 43' sont reliés aux sorties des amplificateurs 42 et 42'. Des sources des deux paires de transistors incluses dans les circuits 42 et 42' transmettent respectivement les signaux permutés ou non IR et IR' à une sortie d'antenne 45 et une sortie de préparation 45' à travers deux amplificateurs de sortie à gain réglable 44 et 44'.

Un signal de commande COM appliqué aux grilles des transistors à effet de champs à travers des amplificateurs différentiels inclus dans les circuits 43 et 43' commande ainsi le transfert direct des signaux IR et IR' vers les sorties 45 et 45', ou la permutation de ces derniers, pour transmettre les signaux IR et IR' vers les sorties 45' et 45. En pratique, après préparation et visualisation de l'image future IR', pendant la diffusion d'une image IR, la permutation à lieu pour diffuser l'image IR' à la place de l'image IR et pour préparer une nouvelle image à partir du mélangeur 1.

Il est à noter que dans la Fig. 6, l'étage de sortie 4 peut être remplacé par l'étage de sortie D4 afin d'appliquer à l'entrée 41' un signal d'image noire pour réaliser, à la demande, un fondu au noir de l'image IR sortant du mélangeur 1 et appliquée à l'entrée 41.

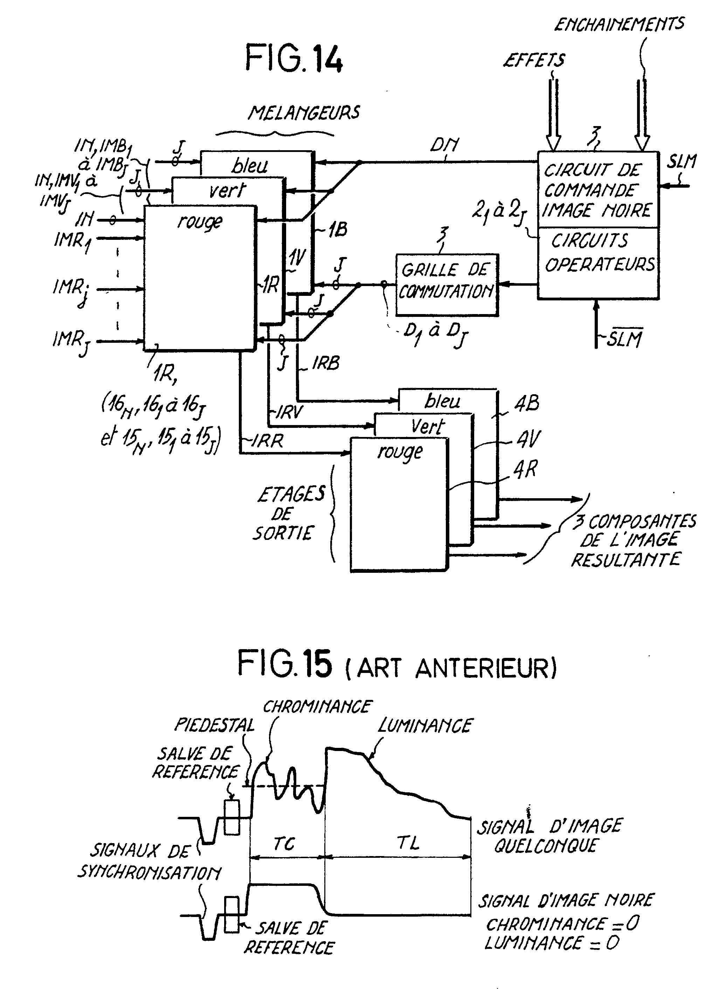

Comme déjà dit, les signaux vidéo entrants sont codés selon un même standard, qui peut être le standard NTSC ou PAL. Les dispositifs mélangeurs montrés aux Figs.6 et 12 tels que décrits ci-dessus sont directement utilisables pour de tels signaux vidéo codés. Par exemple en référence à des signaux PAL montrés à la Fig. 13, le dispositif mélangeur permet de transmettre directement, sous la commande du signal logique de synchronisation de suppression de ligne et de trame SLM, le palier de synchronisation de ligne et les salves de référence de la sous-porteuse de chrominance sur le palier arrière de suppression de ligne du signal d'image noire, et le niveau noir de suppression du signal d'image noire IN ou IN' sans subir d'altération. En outre, il est à noter que chaque signal entrant traverse le mélangeur 1, ou 1', suivant des trajets identiques, si bien que la mise en phase et la synchronisation des signaux entrants sont conservées en sortie du mélangeur, après combinaison. De plus, les signaux de découpe $D_1$ à $D_J$ ont une largeur de bande faible, de l'ordre de 1,5 MHz, et lorsqu'ils agissent dans les multiplieurs $15_1$ à $15_N$ pour traduire les effets sélectionnés dans les circuits opérateurs, ils n'introduisent pas de composantes de fréquence pouvant être captées dans le signal résultant, comme des composantes du spectre de la sous-porteuse de chrominance.

Le principe du dispositif mélangeur montré à la Fig.6 est également utilisable lorsque chaque image à combiner est représentée par trois signaux composants associés aux trois couleurs primaires rouge R, verte V et bleue B. Dans cette application montrée à la Fig. 14, un dispositif mélangeur comprend, à la place du mélangeur 1, trois mélangeurs 1R, 1V et 1B recevant respectivement des signaux composants $IMR_1$ à $IMR_J$, $IMV_1$ à $IMV_J$ et $IMB_1$ à $IMB_J$ associées aux couleurs rouge, verte et bleue d'images délivrées par sources vidéo, et à la place de l'étage de sortie 4, trois étages de sortie 4R, 4V et 4B recevant des signaux composants résultants IRR, IRV et IRB délivrés par les mélangeurs 1R, 1B et 1V respectivement. Un même signal de découpe, tel que celui $D_j$ élaboré par le circuit opérateur $2_j$, commande simultanément, à travers une unique grille de commutation 3 commune aux trois mélangeurs, des effets spéciaux pour les trois signaux composants $IMR_j$, $IMV_j$ et $IMB_j$ émanant de la

source vidéo associée. Par ailleurs, les mélangeurs 1R, 1V et 1B reçoivent trois signaux d'image noire identiques IN. Toute autre réalisation, plus complexe pour mélanger des signaux composants de couleur primaire, du genre de celle montrée à la Fig. 12, est également possible.

Selon une autre application, les signaux vidéo entrants peuvent être des signaux du type MAC, actuellement en cours de normalisation, fondés sur une compression et un multiplexage temporel des composantes analogiques de luminance et de chrominance en un paquet dans chacune des lignes ; l'abréviation MAC signifie "multiplexage analogique des composantes" traduit de l'anglais "Multiplex Analog Components". La Fig. 15 montre un tel signal pour une ligne quelconque et une ligne au niveau noir ; un piédestal de 350 mV au dessus du niveau de noir pendant les intervalles de temps occupés par les signaux de chrominance se retrouve dans tous les types de signaux MAC. Dans ce cas, il convient de prendre certaines précautions présentées ci-après, au niveau des signaux d'effets afin d'obtenir des signaux de découpe $D_1$ à $D_J$ compatibles avec les signaux MAC.

Les effets de médaillons, de titrage et d'autres incrustation et de fonds dégradés ou colorés par volets obtenus dans les circuits 21 et 23 d'un circuit opérateur, tel que $2_j$, sont obtenus en agissant simultanément dans des intervalles temporels TC et TL assignés à la chrominance et à la luminance. Entre la sortie du signal découpe $D_j$ du circuit opérateur $2_j$, c'est-à-dire entre la sortie du circuit ET $51_7$ et l'entrée correspondante $11_j$ de la grille de commutation 12 est inséré un circuit de doublement et de compression de découpe. Pour chaque ligne du signal MAC, ce dernier circuit comprime une première fois le signal $D_j$, comme la compression subie par les signaux de chrominance pendant l'intervalle TC, et une seconde fois le signal $D_j$, comme la compression subie par le signal de luminance pendant l'intervalle TL. Les deux signaux de découpe comprimés sont ensuite additionnés. Dans ce cas, le signal de l'image résultante sortant du mélangeur est bien un signal MAC ayant un piédestal en chrominance provenant pour partie tantôt du signal de l'une des images à combiner, tantôt d'une autre image, le piédestal du signal résultant étant compris dans les tolérances admises pour les piédestals des signaux entrants.

Lors d'un fondu enchaîné élaboré à partir du signal $TP_j$ pour $f_j = 1$ dans le circuit 23 du circuit $2_j$, le signal $IM_j$ est atténué d'un facteur $\alpha_j$ et un autre signal entrant tel que $IM_{j+1}$ est atténué d'un facteur $\alpha_{j+1} = 1-\alpha_j$. Même si ces facteurs ne sont pas parfaitement complémentaires, il résulte du principe de fonctionnement du mélangeur en référence à la Fig. 7 que le signal résultant sortant IR a la même amplitude que les signaux $IM_j$ et $IM_{j+1}$

lorsque ceux-ci ont des amplitudes égales ; le piédestal en chrominance des signaux MAC entrants est donc conservé dans le signal IR. Si les valeurs des piédestals dans les signaux $IM_j$ et $IM_{j+1}$ sont différentes, par exemple de $\Delta p_j$ et $\Delta p_{j+1}$ par rapport à la valeur de piédestral nominale normalisée, l'erreur $\Delta p$ sur le piédestral dans le signal IR est $\Delta p = \alpha_j.\Delta p_j + (1-\alpha_j)\Delta p_{j+1}$ et est donc inférieur à la tolérance maximale acceptable.

Lorsqu'un fondu au noir est commandé par le signal $fn_j$, dans le circuit 23 du circuit $2_j$, c'est-à-dire lorsqu'un fondu enchaîné de l'image $IM_j$ avec l'image noire IN est commandé, le piédestal en chrominance est restitué dans le signal résultant IR, compte tenu des remarques précédentes pour un fondu enchaîné. Il en est de même lorsqu'un effet d'ombre ou un effet de spot est sélectionné dans le circuit 24 du circuit opérateur.

Pour un effet de surimpression est utilisé par exemple un signal d'effet appliqué au circuit 21 et analogue au "signal de commande de gain" établi par le circuit de commande de gain décrit dans la demande de brevet français 85-01133 du 28 Janvier 1985, non encore publiée, au nom de l'actuel demandeur.

Par ailleurs, en ce qui concerne des informations contenues dans les intervalles de suppression de ligne et de trame, celles-ci sont différentes selon les types de signaux MAC utilisés. Par exemple pour un signal D2-MAC-paquet, des bits de synchronisation de ligne, des bits de synchronisation de trame et des bits de voies de son et de données ainsi que des salves de chrominance numériques, sont transmis pendant les intervalles de synchronisation et de suppression de ligne et trame. Afin que ces bits ne soient pas affectés par le mélange des signaux entrants MAC, ces bits sont extraits en entrée du dispositif mélangeur, et réintroduits en sortie du dispositif mélangeur. Cependant, la suppression de ces bits en entrée n'est pas obligatoire, si on prend des précautions particulières sur les niveaux des impulsions d'alignement CLP dans les étages d'entrée afin de ne point perturber la restitution du niveau noir.

## Revendications

1. Dispositif pour mélanger plusieurs signaux vidéo entrants ($IM_1$ à $IM_J$) en un signal vidéo résultant (IR) représentant une image résultant de la superposition d'images représentées par des signaux vidéo entrants, caractérisé en ce qu'il comprend plusieurs moyens ($2_1$ à $2_J$) pour établir des signaux de découpe d'image analogiques ($D_1$ à $D_J$) ayant des amplitudes comprises entre des niveaux bas ("0") et haut ("1"), la somme des amplitudes des signaux de découpe étant inférieure au niveau haut ("1"), des moyens de commutation (12) pour sélectionner les signaux de découpe ($D_1$ à $D_J$) afin d'associer à chacun des signaux vidéo entrants ($IM_1$ à $IM_J$) un signal de découpe associé, et plusieurs moyens ($15_1$ à $15_J$) recevant respectivement les signaux vidéo entrants ($IM_1$ à $IM_J$) pour les atténuer respectivement par des facteurs d'atténuation fonction des signaux de découpe associés afin de transmettre le signal résultant (IR) par une borne de sortie commune (41) aux moyens pour atténuer, la somme des facteurs d'atténuation étant égale à l'unité.

2. Dispositif conforme à la revendication 1, caractérisé en ce que les moyens pour atténuer ($15_1$ à $15_J$) comprennent des circuits à résistance variable ($R_1$ à $R_J$) ayant des entrées recevant respectivement les signaux entrants ($IM_1$ à $IM_J$) et des sorties reliées à ladite borne commune (41) transmettant le signal résultant (IR), et commandés en tension respectivement par lesdits signaux de découpe associés ($D_1$ à $D_J$).

3. Dispositif conforme à la revendication 2, caractérisé en ce que chacun des circuits à résistance variable ($R_1$ à $R_J$) comprend un transistor du type à effet de champ ayant un drain ($d_1$ à $d_J$) recevant le signal vidéo entrant respectif ($IM_1$ à $IM_J$), une grille ($14_1$ à $14_J$) recevant le signal de découpe associé ($D_1$ à $D_J$) et une source ($s_1$ à $s_J$) reliée à ladite borne commune (41).

4. Dispositif conforme à l'une quelconque des revendications 1 à 3, caractérisé en ce que des moyens de commutation (12) offrent une bande passante de l'ordre de 1,5 MHz.

5. Dispositif conforme à l'une quelconque des revendications 1 à 4, caractérisé en ce que chacun ($2_j$) des moyens pour établir comprend un sommateur-inverseur analogique ($57_1$) pour produire un signal complémentaire au niveau haut ("1") de la somme des signaux de découpe ($2_1$ à $2_{j-1}$) destinés à découper des images dans des plans ($P_1$ à $P_{j-1}$) superposés au-dessus du plan ($P_J$) de l'image (j) découpée par le signal de découpe ($D_j$) établi par le moyen pour établir ($2_j$), et des moyens ($51_2$) recevant un signal analogique d'effet ($EFT_j$) écrêté au niveau haut ("1") et ledit signal complémentaire de ladite somme de signaux de découpe pour produire ledit signal de découpe ($D_j = K_j$) sensiblement égal au plus petit de ces deux signaux.

6. Dispositif conforme à la revendication 5, caractérisé en ce que ledit moyen pour établir $(2_j)$ comprend des moyens (21) pour combiner plusieurs signaux analogiques $(E_1$ à $E_M)$ propres à créer des effets spéciaux d'image en ledit signal d'effet $(EFT_j)$.

7. Dispositif conforme à l'une quelconque des revendications 1 à 6, caractérisé en ce que chacun $(2_j)$ des moyens pour établir comprennent des moyens (23, 26) activés par un signal de commande de fondu au noir $(fn_j = 1)$ et recevant un signal d'enchaînement au noir $(TP_j)$ pour fournir un signal de commande de niveau noir $(CN_j)$ variant de façon complémentaire à un signal de découpe de plan prédéterminé $(K_j)$ relativement au signal d'enchaînement au noir $(TP_j)$ et constituant ledit signal de découpe $(D_j)$, et en ce que le dispositif comprend des moyens (3) pour additionner les signaux de commande de niveau de noir $(CN_1$ à $CN_J)$ fournis par les moyens pour établir $(2_1$ à $2_J)$ en un signal de commande d'image noire (DN), et un moyen $(15_N)$ recevant un signal vidéo entrant (IN) représentant une image noire, relié à ladite borne commune (41) et analogue aux autres moyens pour atténuer $(15_1$ à $15_J)$, pour atténuer le signal représentant l'image noire (IN) en fonction du signal de commande d'image noire (DN).

8. Dispositif conforme à la revendication 7, caractérisé en ce qu'il comprend des moyens $(51_7)$ pour imposer le niveau bas ("0") aux signaux de découpe $(D_1$ à $D_N)$ et le niveau haut ("1") au signal de commande d'image noire (CN) pendant des intervalles de synchronisation et de suppression de ligne et trame (SLT).

9. Dispositif conforme à la revendication 7 ou 8, caractérisé en ce que les moyens pour fournir un signal de commande de niveau noir (23, 26) comprennent des moyens $(58_2, 53_2)$ pour délivrer le signal d'enchaînement au noir $(TP_j)$ en réponse à un état prédéterminé du signal de commande de fondu au noir $(fn_j = 1)$, des moyens $(51_3)$ pour délivrer le plus petit $(KE_j)$ des signaux de découpe de plan $(K_j)$ et du signal d'enchaînement au noir $(ECH_j = TP_j)$, et des moyens $(55_2)$ pour soustraire ledit plus petit signal $(KE_j)$, constituant le signal de découpe établi $(D_j)$, au signal de découpe de plan $(K_j)$, afin de produire un signal de différence $(K_j-KE_j)$ constituant ledit signal de commande de niveau noir $(CN_j)$.

10. Dispositif conforme aux revendications 5 et 9, caractérisé en ce que les moyens pour fournir un signal de commande de niveau noir (23, 26) reçoivent, comme signal de découpe de plan $(K_j)$, le plus petit du signal d'effet $(EFT_j)$ et dudit signal complémentaire de ladite somme, et comprennent, en outre, des moyens $(51_8, 54_3)$ activés par ledit signal de commande de fondu au noir $(fn_j = 1)$ pour additionner ledit plus petit signal $(KE_j)$, constituant le signal de découpe établi $(D_j)$, audit signal de commande de niveau noir $(CN_j)$ en un signal d'addition $(D_j$ plus $CN_j)$ appliqué aux sommateurs-inverseurs $(57_1)$ inclus dans les moyens pour établir $(2_{j+1}$ à $2_J)$ associés à des plans d'image inférieurs $(P_{j+1}$ à $P_J)$.

11. Dispositif conforme à la revendication 9 ou 10, caractérisé en ce que les moyens pour délivrer le signal d'enchaînement au noir $(58_2, 53_2)$ délivrent en outre sélectivement une tension nulle, un signal analogique variable de fondu enchaîné $(TP_j)$ compris entre les niveaux haut et bas, et des signaux de volet $(VLT_1$ à $VLT_N)$ à créneaux de tensions continues comprises entre les niveaux haut et bas en fonction de signaux de commande logiques respectifs $(sec_j ; fe_j ; vlt_j$ et $SVLT_1$ à $SVLT_N)$.

12. Dispositif conforme à l'une quelconque des revendications 1 à 11, caractérisé en ce que chacun $(2_j)$ des moyens pour établir comprend des moyens (24, 25) pour atténuer ledit signal de découpe $(D_j)$ afin de créer des assombrissements enchaînés dans l'image représentée par le signal vidéo entrant $(IM_j)$ associé audit signal de découpe $(D_j)$.

13. Dispositif conforme aux revendications 9 et 12, caractérisé en ce que les moyens pour atténuer le signal de découpe (24, 25) comprennent des moyens $(58_4, 53_3, 51_4)$ pour délivrer l'un de signaux analogiques d'ombre $(OMB_1$ à $OMB_R)$ ayant des niveaux prédéterminés en fonction de signaux de commande respectifs $(SOMB_1$ à $SOMB_R ; omb_j)$, et/ou l'un de signaux analogiques d'effet de spot $(ES_1$ à $ES_Q)$ en fonction de signaux de commande respectifs $(SES_1$ à $SES_Q ; spl_j)$ additionné au signal d'ombre sélectionné, afin de délivrer un signal d'assombrissement $(AS_j)$ écrêté au niveau haut ("1"), et des moyens (59) pour multiplier analogiquement le signal d'assombrissement $(AS_j)$ et le plus petit $(KE_j)$ des signaux de découpe de plan $(K_j)$ et du signal d'enchaînement au noir $(ECH_j)$ en un signal de produit, et des moyens pour soustraire audit plus petit signal $(KE_j)$ ledit signal de produit $(KE_j \times AS_j)$ afin d'établir ledit signal de découpe $(D_j)$.

**14.** Dispositif conforme à la revendication 13, caractérisé en ce que le moyen pour établir ($2_j$) comprend des seconds moyens ($54_2$) pour additionner ledit signal de produit ($KE_j \times AS_j$) et ledit signal de différence ($K_j - KE_j$) en ledit signal de commande de niveau de noir ($CN_j$).

**15.** Dispositif conforme à l'une quelconque des revendications 1 à 14, caractérisé en ce que lesdits signaux vidéo entrants ($IN_1$ à $IN_J$, IN) et ledit signal vidéo résultant (IR) sont des signaux vidéo selon un standard de télévision en couleurs tel que PAL, ou NTSC.

**16.** Dispositif conforme à l'une quelconque des revendications 1 à 14, caractérisé en ce que lesdits signaux vidéo entrants ($IN_1$ à $IN_J$, IN) et ledit signal vidéo résultant (IR) sont des signaux du type "multiplexage analogique des composantes" (MAC) et en ce que le dispositif comprend des moyens pour compresser les signaux de découpe ($D_1$ à $D_J$) dans des intervalles de temps (TC, TL) assignés à la transmission de la luminance et à la chrominance dans les signaux entrants d'une manière analogue aux compressions subies par les signaux de luminance et de chrominance.

**17.** Dispositif conforme à l'une quelconque des revendications 1 à 14, caractérisé en ce qu'il comprend trois groupes (1R, 1V, 1B) de plusieurs moyens pour atténuer ($15_1$ à $15_J$), recevant respectivement trois groupes de signaux composants entrants associés à trois couleurs primaires (R, V, B), un signal de découpe ($D_j$) étant appliqué à des moyens pour atténuer des signaux composants ($IMR_j$, $IMV_j$, $IMB_j$) provenant d'une même source vidéo.

## Claims

**1.** Device for mixing plural incoming video signals ($IM_1$ to $IM_J$) into a resultant video signal (IR) representing an image resulting from the superimposition of images represented by incoming video signals, characterized that it comprises plural means ($2_1$ to $2_J$) for deriving analog image chopping signals ($D_1$ to $D_J$) having amplitudes varying between low ("0") and high ("1") levels, the sum of the chopping signal amplitudes being less than the high level ("1"), switching means (12) for selecting the chopping signals ($D_1$ to $D_J$) thereby associating with each of the incoming video signals ($IM_1$ to $IM_J$) an associated chopping signal, and plural means ($15_1$ to $15_J$) receiving respectively the incoming video signals ($IM_1$ to $IM_J$) for attenuating them respectively by attenuation factors dependent on the associated chopping signals thereby transmitting the resultant signal (IR) via an output terminal (41) common to the attenuating means, the sum of the attenuation factors being equal to the unity.

**2.** Device according to claim 1, characterized in that the attenuating means ($15_1$ to $15_J$) comprise variable resistance circuits ($R_1$ to $R_J$) having inputs receiving respectively the incoming signals ($IM_1$ to $IM_J$) and outputs connected to said common terminal (41) transmitting the resultant signal (IR), and voltage controlled respectively by said associated chopping signals ($D_1$ to $D_j$).

**3.** Device according to claim 2, characterized in that each of the variable resistance circuits ($R_1$ to $R_J$) comprises a field effect type transistor having a drain ($d_1$ to $d_J$) receiving the respective incoming video signal ($IM_1$ to $IM_J$), a gate ($14_1$ to $14_J$) receiving the associated chopping signal ($D_1$ to $D_J$) and a source ($s_1$ to $s_J$) connected to said common terminal (41).

**4.** Device according to any one of claims 1 to 3, characterized in that the switching means (12) have a pass-band of about 1.5 MHz.

**5.** Device according any one of claims 1 to 4, characterized in that each ($2_j$) of the deriving means comprises an analog inverter-summator ($57_1$) for producing a complementary signal at the high level ("1") of the sum of the chopping signals ($2_1$ to $2_{j-1}$) designed to chop images in planes ($P_1$ to $P_{j-1}$) superposed above a plane ($P_j$) of the image (j) chopped by the chopping signal ($D_j$) derived by the deriving means ($2_j$), and means ($51_2$) receiving an analog effect signal ($EFT_j$) clipped to the high level ("1") and said complementary signal of said chopping signal sum for producing said chopping signal ($D_j = K_j$) substantially equal to the smallest of these two signals.

**6.** Device according to claim 5, characterized in that said deriving means ($2_j$) comprises means (21) for combining plural analog signals ($E_1$ to $E_M$) designed to create special image effects into said effect signal ($EFT_j$).

**7.** Device according to any one of claims 1 to 6, characterized in that each ($2_j$) of the deriving means comprises (23,26) activated by a black fade control signal ($fn_j = 1$) and receiving a black dissolve signal ($TP_j$) for supplying a black level control signal ($CN_j$) varying complementarily to a predetermined plane chop-

ping signal ($K_j$) relatively to the black dissolve signal ($TP_j$) and forming said chopping signal ($D_j$), and in that the device comprises means (3) for adding the black level control signals ($CN_1$ to $CN_J$) supplied by the deriving means ($2_1$ to $2_J$) into a black image control signal (DN), and a means ($15_N$) receiving an incoming video signal (IN) representing a black image, connected to said common terminal (41) and similar to the other attenuating means ($15_1$ to $15_J$) for attenuating the black image representing signal (IN) as a function of the black image control signal (DN).

8. Device according to claim 7, characterized in that it comprises means ($51_7$) for imposing the low level ("0") in the chopping signals ($D_1$ to $D_N$) and the high level ("1") in the black image control signal (CN) during line and field synchronizing and blanking intervals (SLT).

9. The device according to claim 7 or 8, characterized in that the black level control signal supplying means (23,26) comprise means ($58_2$,$53_2$) for delivering the black dissolve signal ($TP_j$) in response to a predetermined state of the black fade control signal ($fn_j = 1$), means ($51_3$) for delivering the smallest ($KE_j$) of the plane chopping signals ($K_j$) and the black dissolve signal ($ECH_j = TP_j$), and means ($55_2$) for subtracting the smallest signal ($KE_j$), forming the derived chopping signal ($D_j$), from the plane chopping signal ($K_j$) thereby producing a difference signal ($K_j$-$KE_j$) forming said black level control signal ($CN_j$).

10. Device according to claims 5 and 9, characterized in that the black level control signal supplying means (23,26) receive, as plane chopping signal ($K_j$), the smallest of the effect signal ($EFT_j$) and said sum complementary signal, and further comprise means ($51_8$, $54_3$) activated by said black fade control signal ($fn_j = 1$) for adding said lowest signal ($KE_j$) forming the derived chopping signal ($D_j$), to said black level control signal ($CN_j$) into an addition signal ($D_j$ plus $CN_j$) applied to the inverters-summators ($57_1$) included in the deriving means ($2_{j+1}$ to $2_J$) associated to lower image planes ($P_{j+1}$ to $P_J$).

11. Device according to claim 9 to 10, characterized in that the black dissolve signal delivering means ($58_2$, $53_2$) further deliver selectively a zero voltage, an analog cross fade signal ($TP_j$) varying between the high and low levels, and shutter signals ($VLT_1$ to $VLT_N$) at d.c voltage slots varying between the high and low levels as a function of respective control logic signals ($sec_j$; $fe_j$; $vlt_j$ and $SVLT_1$ to $SVLT_N$).

12. Device according to any one of claims 1 ot 11, characterized in that each ($2_j$) of the deriving means comprises means (24, 25) for attenuating said chopping signal ($D_j$) thereby creating dissolve darkenings in the image represented by the incoming video signal ($IM_j$) associated with said chopping signal ($D_j$).

13. Device according to claims 9 and 12, characterized in that the chopping signal attenuating means (24, 25) comprise means ($58_4$, $53_3$, $51_4$) for delivering one of analog shade signals ($OMB_1$ to $OMB_R$) having predetermined levels as a function of respective control signals ($SOMB_1$ to $SOMB_R$; $omb_j$), and/or one of analog spot effect signals ($ES_1$ to $ES_Q$) as a function of respective control signals ($SES_1$ to $SES_Q$; $spl_j$) added to the selected shade signal, thereby supplying a darkening signal ($AS_j$) clipped to the high level ("1"), and means (59) for analogically multiplying the darkening signal ($AS_j$) and the lowest ($KE_j$) of the plane chopping signals ($K_j$) and the black dissolve signal ($ECH_j$) into a product signal, and means for subtracting from said lowest signal ($KE_j$) said product signal ($KE_j$ x $AS_j$) thereby deriving said chopping signal ($D_j$).

14. Device according to claim 13, characterized in that the deriving means ($2_j$) comprises second means ($54_2$) for adding said product signal ($KE_j$ x $AS_j$) and said difference signal ($K_j$ - $KE_j$) into said black level control signal ($CN_j$).

15. Device according to any one of claims 1 to 14, characterized in that said incoming video signals ($IN_1$ to $IN_J$, IN) and said resultant video signal (IR) are video signals according to a colour television standard such as PAL or NTSC.

16. Device according to any one of claims 1 to 14, characterized in that said incoming video signals ($IN_1$ to $IN_J$, IN) and said resultant video signal (IR) are "multiplex analog component" type signals and in that the device comprises means for compressing the chopping signals ($D_1$ to $D_j$) in time intervals ( TC, TL) assigned to transmission of luminance and chrominance in the incoming signals similar to compressions applied to the luminance and chrominance signals.

17. Device according to any one of claims 1 to 14, characterized in that it comprises three groups

(1R, 1V, 1B) of plural attenuating means (15₁ to 15_J) respectively receiving three incoming component signal groups associated to three primary colours (R, V, B), a chopping signal (D_j) being applied to means for attenuating component signals (IMR_j, IMV_j, IMB_j) outgoing from a same video source.

## Ansprüche

1. Vorrichtung zum Mischen mehrerer Videoeingangssignale (IM₁ bis IM_J) zu einem resultierenden Videosignal (IR), das ein sich von der Überlagerung von durch die Videoeingangssignale dargestellten Bildern resultierendes Bild darstellt, dadurch **gekennzeichnet,** daß sie mehrere Mittel (2₁ bis 2_J) zum Vorsehen der analogen Bildaufteilsignale (D₁ bis D_J) mit Amplituden enthalten zwischen niedrigen ("0") und hohen ("1") Pegeln, wobei die Summe der Amplituden der Aufteilsignale unterhalb des hohen Pegels ("1") liegt, Schaltmittel (12) zum Auswählen der Aufteilsignale (D₁ bis D_J), um jedem der Videoeingangssignale (IM₁ bis IM_J) ein zugeordnetes Aufteilsignal zuzuordnen, und mehrere Mittel (15₁ bis 15_J) aufweist, die jeweils die Videoeingangssignale (IM₁ bis IM_J) aufnehmen, um sie jeweils um von den zugeordneten Aufteilsignalen abhängige Dämpfungsfaktoren zu dämpfen, um das resultierende Signal (IR) über einen gemeinsamen Ausgangsanschluß (41) zu den Dämpfungsmitteln zu übertragen, wobei die Summe der Dämpfungsfaktoren gleich der Eins ist.

2. Vorrichtung nach Anspruch 1, dadurch **gekennzeichnet,** daß die Dämpfungsmittel (15₁ bis 15_J) Kreise mit variablem Widerstand (R₁ bis R_J) aufweisen, deren Eingänge jeweils die Eingangssignale (IM₁ bis IM_J) aufnehmen und deren Ausgänge mit dem gemeinsamen Anschluß (41) verbunden sind, der das resultierende Signal (IR) überträgt, und die durch die zugeordneten Aufteilsignale (D₁ bis D_J) jeweils spannungsgesteuert sind.

3. Vorrichtung nach Anspruch 2, dadurch **gekennzeichnet,** daß jeder der Kreise mit variablem Widerstand (R₁ bis R_J) einen Feldeffekttransistor mit einem das jeweilige Videoeingangssignal (IM₁ bis IM_J) aufnehmenden Drain-Anschluß (d₁ bis d_J), ein das zugeordnete Aufteilsignal (D₁ bis D_J) aufnehmendes Gitter (14₁ bis 14_J) und einem mit dem gemeinsamen Anschluß (41) verbundenen Source-Anschluß (s₁ bis s_J) umfaßt.

4. Vorrichtung nach einem beliebigen der Ansprüche 1 bis 3, dadurch **gekennzeichnet,** daß die Schaltmittel (12) einen Durchlaßbereich in der Größe von 1,5 MHz aufweisen.

5. Vorrichtung nach einem beliebigen der Ansprüche 1 bis 4, dadurch **gekennzeichnet,** daß jedes (2_j) der Mittel zum Vorsehen einen analogen Summator-Inverter (57₁) zum Erzeugen eines komplementären Signals mit hohem Pegel ("1") der Summe der Aufteilsignale (2₁ bis 2_{j-1}), die zum Aufteilen der Bilder in den Ebenen (P₁ bis P_{j-1}) bestimmt sind, die oberhalb der Ebene (P_J) des Bildes (j) angeordnet sind, das durch das Mittel zum Vorsehen (2_j) vorgesehene Aufteilsignal (D_J) aufgeteilt ist, und Mittel (51₂) umfaßt, die ein im hohen Pegel ("1") begrenztes analoges Effekt-Signal (EFT_j) und das komplementäre Signal der Summe von Aufteilsignalen aufnehmen, um das Aufteilsignal (D_j = K_j) im wesentlichen gleich dem kleineren dieser beiden Signale zu erzeugen.

6. Vorrichtung nach Anspruch 5, dadurch **gekennzeichnet,** daß das Mittel zum Vorsehen (2_j) Mittel (21) zum Kombinieren mehrerer zweckmäßiger analoger Signale (E₁ bis E_M) zum Erzeugen spezieller Bildwirkungen im Effekt-Signal (EFT_j) aufweist.

7. Vorrichtung nach einem beliebigen der Ansprüche 1 bis 6, dadurch **gekennzeichnet,** daß jedes (2_j) der Mittel zum Vorsehen Mittel (23, 26) aufweist, die durch ein Ausblend-Steuersignal (fn_j = 1) aktiviert werden und ein Schwarz-Verknüpfungssignal (TP_j) zum Liefern eines Schwarzpegel-Steuersignals (CN_j) aufnehmen, das sich auf komplementäre Weise zu einem vorbestimmten Ebenenaufteilsignal (K_j) in bezug auf das Schwarz-Verknüpfungssignal (TP_j) ändert und das Aufteilsignal (D_j) bildet, und daß die Vorrichtung Mittel (3) zum Addieren der Schwarzpegel-Steuersignale (CN₁ bis CN_J), die durch die Mittel zum Vorsehen (2₁ bis 2_J) zu einem Schwarzbild-Steuersignal (DN) geliefert werden und ein Mittel (15_N) aufweist, das ein ein Schwarzbild darstellendes Videoeingangssignal (IN) aufnimmt, verbunden mit dem gemeinsamen Anschluß (41) und analog zu den anderen Dämpfungsmitteln (15₁ bis 15_J), um das das Schwarzbild darstellende Signal (IN) abhängig von dem Schwarzbild-Steuersignal (DN) zu dämpfen.

8. Vorrichtung nach Anspruch 7, dadurch **gekennzeichnet,** daß sie Mittel (51₇) aufweist, um den niedrigen Pegel ("0") den Aufteilsignalen (D₁ bis D_N) und den hohen Pegel ("1") dem Schwarzbild-Steuersignal (CN) während der Intervalle zur Synchronisation und zur Zeilen- und Teilbildunterdrückung (SLT) zuzuteilen.

9. Vorrichtung nach Anspruch 7 oder 8, dadurch **gekennzeichnet,** daß die Mittel zum Liefern eines Schwarzbild-Steuersignals (23, 26) Mittel (58₂, 53₂) zum Abgeben des Schwarz-Verknüpfungssignals (TPⱼ) in Reaktion auf einen vorbestimmten Zustand des Ausblend-Steuersignals (fnⱼ = 1), Mittel (51₃) zum Abgeben des kleineren (KEⱼ) der Ebenenaufteilsignale (Kⱼ) und des Schwarz-Verknüpfungssignals (ECHⱼ = TPⱼ) und Mittel (55₂) zum Substrahieren des kleineren Signals (KEⱼ) aufweist, daß das vorgesehene Aufteilsignal (Dⱼ) bildet, von dem Ebenenaufteilsignal (Kⱼ), um ein Differenzsignal (Kⱼ-KEⱼ) zu erzeugen, das das Schwarzpegel-Steuersignal (CNⱼ) bildet.

10. Vorrichtung nach den Ansprüchen 5 und 9, dadurch **gekennzeichnet,** daß die Mittel zum Liefern eines Schwarzpegel-Steuersignals (23, 26) als Ebenenaufteilsignal (Kⱼ) das kleinere von dem Effekt-Signal (EFTⱼ) und von dem komplementären Signal der Summe aufnehmen und außerdem Mittel (51₈, 54₃) aufweisen, die durch das Ausblend-Steuersignal (fnⱼ = 1) aktiviert sind, um das kleinere Signal (KEⱼ), das das vorgesehene Aufteilsignal (Dⱼ) bildet, zu dem Schwarzpegel-Steuersignal (CNⱼ) zu einem Additionssignal (Dⱼ plus CNⱼ) zu addieren, das an die Summator-Inverter (57₁), die in den Mitteln zum Vorsehen (2ⱼ₊₁ bis 2ⱼ) enthalten sind, angelegt wird, die den unteren Bildebenen (Pⱼ₊₁ bis Pⱼ) zugeordnet sind.

11. Vorrichtung nach Anspruch 9 oder 10, dadurch **gekennzeichnet,** daß die Mittel zum Abgeben des Schwarz-Verknüpfungssignals (58₂, 53₂) außerdem eine Null-Spannung, ein variables analoges verknüpftes Ausblendsignal (TPⱼ), das zwischen dem hohen und dem niedrigen Pegel enthalten ist, und Klappensignale (VLT₁ bis VLTₙ) mit Gleichspannungsrechteck-Impulsen ausgeben, die zwischen dem hohen und niedrigen Pegel enthalten sind, abhängig von entsprechenden logischen Steuersignalen (secⱼ; feⱼ; vltⱼ und SVLT₁ bis SVLTₙ).

12. Vorrichtung nach einem beliebigen der Ansprüche 1 bis 11, dadurch **gekennzeichnet,** daß jedes (2ⱼ) der Mittel zum Vorsehen Mittel (24, 25) zum Dämpfen des Aufteilsignals (Dⱼ) aufweist, um verknüpfte Verdunkelungen in dem durch das dem Aufteilsignal (Dⱼ) zugeordneten Videoeingangssignal (IMⱼ) dargestellten Bild zu erzeugen.

13. Vorrichtung nach den Ansprüchen 9 und 12, dadurch **gekennzeichnet,** daß die Mittel zum Dämpfen des Aufteilsignals (24, 25) Mittel (58₄, 53₃, 51₄) zum Abgeben des einen von analogen Schattensignalen (OMB₁ bis OMBᵣ) mit vorbestimmten Pegeln abhängig von entsprechenden Steuersignalen (SOMB₁ bis SOMBᵣ; ombⱼ) und/oder des einen von analogen Fleckeffekt-Signalen (ES₁ bis ES_Q) abhängig von entsprechenden Steuersignalen (SES₁ bis SES_Q; splⱼ), addiert zum ausgewählten Schattensignal, um ein im hohen Pegel ("1") begrenztes Verdunkelungssignal (ASⱼ) abzugeben, und Mittel (59) zum analogen Multiplizieren des Verdunkelungssignals (ASⱼ) und des kleineren (KEⱼ) der Ebenenaufteilsignale (Kⱼ) und des Schwarz-Verknüpfungssignals (ECHⱼ) zu einem Produktsignal und Mittel zum Substrahieren des Produktsignals (KEⱼ x ASⱼ) von dem kleineren Signal (KEⱼ) aufweisen, um das Aufteilsignal (Dⱼ) vorzusehen.

14. Vorrichtung nach Anspruch 13, dadurch **gekennzeichnet,** daß das Mittel zum Vorsehen (2ⱼ) zweite Mittel (54₂) aufweist, um das Produktsignal (KEⱼ x ASⱼ) und das Differenzsignal (Kⱼ-KEⱼ) zum Schwarzpegel-Steuersignal (CNⱼ) zu addieren.

15. Vorrichtung nach einem beliebigen der Ansprüche 1 bis 14, dadurch **gekennzeichnet,** daß die Videoeingangssignale (IN₁ bis INⱼ, IN) und das resultierende Videosignal (IR) Videosignale gemäß einem Farbfernsehstandard wie PAL oder NTSC sind.

16. Vorrichtung nach einem beliebigen der Ansprüche 1 bis 14, dadurch **gekennzeichnet,** daß die Videoeingangssignale (IN₁ bis INⱼ, IN) und das resultierende Videosignal (IR) Videosignale vom Typ "Analogmultiplex der Bestandteile" (MAC) sind und daß die Vorrichtung Mittel zum Komprimieren der Aufteilsignale (D₁ bis Dⱼ) in den Zeitintervallen (TC, TL) aufweisen, die der Übertragung der Luminanz und der Chrominanz in den Eingangssignalen auf eine analoge Weise zu den Kompressionen zugeteilt sind, die die Luminanz- und Chrominanzsignale erfahren.

17. Vorrichtung nach einem beliebigen der Ansprüche 1 bis 14, dadurch **gekennzeichnet,** daß sie drei Gruppen (1R, 1V, 1B) von mehreren Dämpfungsmitteln (15₁ bis 15ⱼ) aufweist, die jeweils drei Gruppen von Bestandteileingangssignalen, die drei Primärfarben (R, V, B) zugeordnet sind, ein an die Mittel zum Dämpfen der Bestandteilsignale ($IMR_j$, $IMV_j$, $IMB_j$) angelegtes Aufteilsignal ($D_j$) aufnehmen, die von derselben Videoquelle herkommen.

# FIG.1
## (ART ANTERIEUR)

SOURCES VIDEO

$IM_1$  $IM_2$  $IM_3$  $IM_J$

CGV

IA  MA  AD

MB

+  IR
IMAGE COMPOSITE RESULTANTE

IB

CA  CO

CB  CIRCUIT DE COMMANDE

ENCHAINEMENTS

EFFETS

GRILLE DE COMMUTATION VIDEO-FREQUENCE

GR

COMMUTATEUR A GAIN VARIABLE

EP 0 240 417 B1

FIG. 2 (ART ANTERIEUR)

$IM_1$  $IM_2$  $IM_J$

IA
IB → CGV.1 → S1 → CGV 2 → S2 → CGV 3 → S3 = IR
IC
ID

GRILLE DE COMMUTATION ~ GR

FIG. 3 (ART ANTERIEUR)

$IM_1$  $IM_2$  $IM_J$

IA
IB → CGV 1 → S1
IC → CGV 2 → S2' → CGV 3 → S3' = IR
ID

GRILLE DE COMMUTATION ~ GR

FIG. 4 (ART ANTERIEUR)

$IM_1$  $IM_2$  $IM_J$

IA
IB → CGV 1 → S1

IC
ID → CGV 2 → S2 ou S2'

IE
IF → CGV 3 → S3 ou S3'

IG → IR

GRILLE DE COMMUTATION ~ GR    GRILLE AUXILIAIRE DE COMMUTATION ~ GRA

# FIG.5

COMPOSITION D'IMAGE RESULTANT
DE SUPERPOSITION DE PLANS D'IMAGE

SOURCE
COULEUR du TITRE

INCRUSTATION
D'UN TITRE

SOURCE
IMAGE PERSONNAGE

INCRUSTATION
D'UN PERSONNAGE

ZONE TRANSPARENTE

SOURCE
2me ARRIERE PLAN

SOURCE
1er ARRIERE PLAN

PASSAGE D'UN
ARRIERE PLAN
A UN AUTRE PAR
UN VOLET VERTICAL

MOUVEMENT DU VOLET VERTICAL

FIG.6

**FIG. 7**

$$V_{41} = \sum_{j=1}^{j=J} V_{41,j}$$

**FIG. 8**

$D_j$

$D_{j+1}$

1 Volt

0 Volt

$T_1$  $T_2$  $T_3$  $T_4$  $T_5$

$IM_j$

Fondu enchainé

**FIG. 11**

ZONE TRANSPARENTE DU PLAN $P_1$  $IM_1$  CONTOUR

PLANS

$P_1$

$P_2$

$P_3$

$P_4$

$P_5$

$P_6$

$P_7$

$P_8$

$D_1 \simeq EFT_1$

$D_2 \simeq EFT_2 \cdot \overline{(D_1 \, plus \, CN_1)}$

$D_3 \simeq EFT_3 \cdot \overline{\sum_{j=1}^{2} (D_j \, plus \, CN_j)}$

$D_4$

$D_5$

$D_6$

$D_7$

$D_8 \simeq EFT_8 \cdot \overline{\sum_{j=1}^{7} (D_j \, plus \, CN_j)}$

CN

IMAGE NOIRE

23

FIG.9A

ET (le plus petit)

$a_1 \cdot b_1 \rightarrow s_1 = "a_1 \cdot b_1"$

$s_1 = a_1$ si $a_1 < b_1$

$s_1 = b_1$ si $a_1 > b_1$

FIG.9B

OU (le plus grand)

$a_2 + b_2 \rightarrow s_2 = "a_2 + b_2"$

$s_2 = a_2$ si $a_2 > b_2$

$s_2 = b_2$ si $a_2 < b_2$

FIG.9C

ECRETEUR 0 - 1$^V$

$e \rightarrow \int \rightarrow s$

$V_1 \simeq 1V$

$V_0 \simeq 0.6V$

**PLUS**

**FIG. 9D**

$$SOM = a_1 + a_2 + ... + a_k$$

**MOINS**

**FIG. 9E**

$$DIF = a - b$$

**INVERSEUR**

**FIG. 9F**

$$\bar{a} = 1 - a$$

+Vcc

continu
+1 volt

# FIG. 9G

SOMMATEUR-
INVERSEUR

$$\overline{SOM} = 1 - (a_1 + a_2 + \ldots + a_J) = \overline{a_1 + a_2 + \ldots + a_J}$$

# FIG.13 (ART ANTERIEUR)

SOUS PORTEUSE MODULEE PAR CHROMINANCE

SIGNAL DE LUMINANCE

MIRE DE BARRES COULEUR

SIGNAL DE SYNCHRONISATION

SALVES DE REFERENCE DE SOUS-PORTEUSE DE CHROMINANCE

IMAGE NOIRE

FIG.10    CIRCUIT OPERATEUR $2_j$

EP 0 240 417 B1

# FIG.12

# FIG.14

MELANGEURS

ENCHAINEMENTS

EFFETS

IN,IMB₁ à IMB_J

IN,IMV₁ à IMV_J

IN

IMR₁

IMR_j

IMR_J

J

J

bleu

vert

rouge

DN

1B

1V

1R

J

J

J

IRB

IRV

IRR

1R,

(16_N, 16₁ à 16_J
et 15_N, 15₁ à 15_J)

GRILLE DE
COMMUTATION

D₁ à D_J

3

2₁ à 2_J

3

CIRCUIT DE
COMMANDE
IMAGE NOIRE

CIRCUITS
OPERATEURS

SLM

~SLM

ETAGES
DE
SORTIE

bleu

vert

rouge

4B

4V

4R

3 COMPOSANTES
DE L'IMAGE
RESULTANTE

# FIG.15 (ART ANTERIEUR)

CHROMINANCE

PIEDESTAL

LUMINANCE

SALVE DE
REFERENCE

TC

TL

SIGNAUX DE
SYNCHRONISATION

SALVE DE
REFERENCE

SIGNAL D'IMAGE
QUELCONQUE

SIGNAL D'IMAGE NOIRE
CHROMINANCE = 0
LUMINANCE = 0

29